# EUROPÄISCHE PATENTANMELDUNG

(11) **EP 4 556 301 A1**
(43) Veröffentlichungstag der Anmeldung: **21.05.2025**
(21) Anmeldenummer: 24213627.3
(22) Anmeldetag: 18.11.2024
(51) Int. Cl.: B60L 53/30, B60L 53/65, B60L 53/80

(54) **MOBILE WECHSELEINHEIT ZUM EINBRINGEN VON BATTERIEMODUL**

(30) Priorität: 20.11.2023 DE 102023132228
(71) Anmelder: Deutsche Post AG, 53113 Bonn (DE)
(72) Erfinder: Salomon, Jörg, 53113 Bonn (DE)
(74) Vertreter: Cohausz & Florack

(57) **Zusammenfassung**

Es wird unter anderem eine Vorrichtung offenbart, die Vorrichtung umfassend Mittel eingerichtet zum:
- Navigieren einer mobilen Wechseleinheit zu einer ersten Position unterhalb eines Fahrzeugs;
- Bestimmen zumindest einer Einbringvorrichtung der mobilen Wechseleinheit, wobei die zumindest eine Einbringvorrichtung eingerichtet ist zum Einbringen eines auf der Einbringvorrichtung platzierten Batteriemoduls in das Fahrzeug; und
- Bewirken des Einbringens des auf der bestimmten zumindest einen Einbringvorrichtung platzierten Batteriemoduls in das Fahrzeug
wobei die Vorrichtung Teil der mobilen Wechseleinheit ist und wobei die Mittel ferner eingerichtet sind zum:
- Erhalten einer Fahrzeuginformation, wobei die Fahrzeuginformation das Fahrzeug repräsentiert und wobei das Bestimmen der zumindest einen Einbringvorrichtung zumindest teilweise auf der erhaltenen Fahrzeuginformation basiert

## Beschreibung

### Technisches Gebiet

Beispielhafte Ausführungsformen der vorliegenden Offenbarung betreffen eine Vorrichtung, ein Verfahren, ein Computerprogramm und ein System zum Einbringen zumindest eines Batteriemoduls in ein Fahrzeug.

### Hintergrund

Beispielsweise im Bereich der Elektromobilität weisen Fahrzeuge, die zumindest teilweise von einem Elektromotor angetrieben werden, eine oder mehrere wiederaufladbare Batteriemodule auf. Solche Batteriemodule müssen üblicherweise regelmäßig aufgeladen werden, damit der Elektroantrieb des Fahrzeugs weiter genutzt werden kann. Hierbei können beispielsweise elektrische Ladestationen zum Einsatz kommen, welche in ihrer praktischen Verwendung allerdings verschiedene Nachteile mit sich bringen. Zum Beispiel sind elektrische Ladestationen fest an einem jeweiligen Ort installiert, sodass Fahrzeuge diese Ladestationen zum Aufladen ihrer Batteriemodule nur ortsgebunden nutzen können. Darüber hinaus ist die Installation einer elektrischen Ladestation üblicherweise mit großem Aufwand verbunden.

Ein alternatives Konzept sieht vor, ein entleertes Batteriemodul eines Fahrzeugs nicht an einer elektrischen Ladestation aufzuladen, sondern an einer Batterieaustauschstation gegen ein aufgeladenes Batteriemodul auszutauschen. Auch solche Batterieaustauschstationen sind allerdings üblicherweise fest an einem bestimmten Ort installiert und können daher nur eine eingeschränkte Flexibilität bieten.

### Zusammenfassung beispielhafter Ausführungsformen der vorliegenden Offenbarung

Die vorliegende Offenbarung hat sich daher unter anderem die Aufgabe gestellt, die Bereitstellung von Batteriemodulen für Fahrzeuge zu vereinfachen.

Gemäß der vorliegenden Offenbarung wird eine Vorrichtung offenbart, wobei die Vorrichtung Mittel umfasst, und wobei die Mittel eingerichtet sind zum:
- Navigieren einer mobilen Wechseleinheit zu einer ersten Position unterhalb eines Fahrzeugs;
- Bestimmen zumindest einer Einbringvorrichtung der mobilen Wechseleinheit, wobei die zumindest eine Einbringvorrichtung eingerichtet ist zum Einbringen eines auf der Einbringvorrichtung platzierten Batteriemoduls in das Fahrzeug; und
- Bewirken des Einbringens des auf der bestimmten zumindest einen Einbringvorrichtung platzierten Batteriemoduls in das Fahrzeug.

Gemäß der vorliegenden Offenbarung wird weiterhin ein Verfahren offenbart, wobei das Verfahren die folgenden Schritte umfasst:
- Navigieren einer mobilen Wechseleinheit zu einer ersten Position unterhalb eines Fahrzeugs;
- Bestimmen zumindest einer Einbringvorrichtung der mobilen Wechseleinheit, wobei die zumindest eine Einbringvorrichtung eingerichtet ist zum Einbringen eines auf der Einbringvorrichtung platzierten Batteriemoduls in das Fahrzeug; und
- Bewirken des Einbringens des auf der bestimmten zumindest einen Einbringvorrichtung platzierten Batteriemoduls in das Fahrzeug.

Zum Beispiel ist die Vorrichtung gemäß der vorliegenden Offenbarung eingerichtet zur Ausführung und/oder Steuerung des Verfahrens gemäß der vorliegenden Offenbarung, oder die Vorrichtung gemäß der vorliegenden Offenbarung umfasst jeweilige Mittel zur Ausführung und/oder Steuerung des Verfahrens gemäß der vorliegenden Offenbarung. Dabei können entweder alle Schritte des Verfahrens gesteuert werden, oder alle Schritte des Verfahrens ausgeführt werden, oder einer oder mehrere Schritte gesteuert und einer oder mehrere Schritte ausgeführt werden. Beispielsweise können eines oder mehrere der Mittel durch einen oder mehrere Prozessoren gebildet sein.

In einem weiteren Beispiel ist die Vorrichtung gemäß der vorliegenden Offenbarung eine Vorrichtung, die zumindest einen Prozessor und zumindest einen Speicher, der Programmcode beinhaltet, umfasst, wobei der Speicher und der Programmcode eingerichtet sind, eine Vorrichtung mit dem zumindest einen Prozessor dazu zu veranlassen, zumindest das Verfahren gemäß der vorliegenden Offenbarung auszuführen und/oder zu steuern. Dabei können entweder alle Schritte des Verfahrens gesteuert werden, oder alle Schritte des Verfahrens ausgeführt werden, oder einer oder mehrere Schritte gesteuert und einer oder mehrere Schritte ausgeführt werden.

Gemäß der vorliegenden Offenbarung wird weiterhin ein Computerprogramm offenbart, wobei das Computerprogramm Befehle umfasst, die bewirken, dass eine Vorrichtung die Schritte des Verfahrens gemäß der vorliegenden Offenbarung ausführt Dabei kann es zum Beispiel um die Vorrichtung gemäß der vorliegenden Offenbarung handeln. In einem weiteren Beispiel umfasst das Computerprogramm Programmanweisungen, die einen Prozessor zur Ausführung und/oder Steuerung des Verfahrens gemäß der vorliegenden Offenbarung veranlassen, wenn das Computerprogramm auf dem Prozessor läuft Unter einem Prozessor sollen unter anderem Kontrolleinheiten, Mikroprozessoren, Mikrokontrolleinheiten wie Mikrocontroller, digitale Signalprozessoren (DSP), Anwendungsspezifische Integrierte Schaltungen (ASICs) oder Field Programmable Gate Arrays (FPGAs) verstanden werden. Dabei können entweder alle Schritte des Verfahrens gesteuert werden, oder alle Schritte des Verfahrens ausgeführt werden, oder einer oder mehrere Schritte gesteuert und einer oder mehrere Schritte ausgeführt werden. Das Computerprogramm kann beispielsweise über ein Netzwerk wie das Internet, ein Telefon- oder Mobilfunknetz und/oder ein lokales Netzwerk verteilbar sein. Das Computerprogramm kann zumindest teilweise Software und/oder Firmware eines Prozessors sein. Es kann gleichermaßen zumindest teilweise als Hardware implementiert sein. Das Computerprogramm kann beispielsweise auf einem computerlesbaren Speichermedium gespeichert sein, zum Beispiel einem magnetischen, elektrischen, optischen und/oder andersartigen Speichermedium. Das Speichermedium kann beispielsweise Teil des Prozessors sein, beispielsweise ein (nicht-flüchtiger oder flüchtiger) Programmspeicher des Prozessors oder ein Teil davon. Das Speichermedium kann beispielsweise ein gegenständliches oder körperliches Speichermedium sein.

Zum Beispiel kann die mobile Wechseleinheit als Fahrzeug (z.B. als Transportfahrzeug) verstanden werden, welches sich zumindest teilweise autonom fortbewegen und dabei ein oder mehrere Batteriemodule transportieren kann. Beispielsweise handelt sich bei der mobilen Wechseleinheit um ein unbemanntes Fahrzeug (z.B. ein unbemanntes Transportfahrzeug). Zum Beispiel kann die mobile Wechseleinheit als mobiler Roboter oder als mobiles Robotersystem verstanden werden. Die mobile Wechseleinheit kann beispielsweise eine möglichst niedrige Höhe aufweisen, sodass sie sich unterhalb eines anderen Fahrzeugs (z.B. ein Personenkraftwagen oder ein Lastkraftwagen) bewegen kann.

Die Vorrichtung gemäß der vorliegenden Offenbarung kann ein Teil der mobilen Wechseleinheit sein und beispielsweise als Steuervorrichtung der mobilen Wechseleinheit verstanden werden, welche mit Einzelkomponenten der mobilen Wechseleinheit verbunden ist In einem anderen Beispiel kann die Vorrichtung gemäß der vorliegenden Offenbarung der mobilen Wechseleinheit entsprechen und sämtliche Einzelkomponenten der mobilen Wechseleinheit umfassen.

Die mobile Wechseleinheit umfasst wie weiter unten beschrieben zumindest eine Einbringvorrichtung, auf der beispielsweise ein von der mobilen Wechseleinheit zu transportierendes Batteriemodul platziert werden kann. Die mobile Wechseleinheit kann dabei eine einzelne Einbringvorrichtung oder mehrere Einbringvorrichtungen umfassen, welche beispielsweise nebeneinander (z.B. auf gleicher Höhe) als Teil der mobilen Wechseleinheit angeordnet sind.

Um es der mobilen Wechseleinheit zu ermöglichen sich fortzubewegen, kann die mobile Wechseleinheit ein oder mehrere Bewegungsmittel umfassen. Die Bewegungsmittel umfassen zum Beispiel einen Motorantrieb (z.B. einen elektrischen Motorantrieb), eine Mehrzahl an Rädern (z.B. omnidirektionale Räder oder Differenzialräder) oder Ketten (z.B. ein Raupenband) und Lenkmittel (z.B. ein Lenkmechanismus zum Lenken der Räder). Zum Beispiel umfasst die mobile Wechseleinheit weiterhin eine Steuervorrichtung, welche die einzelnen Komponenten der mobilen Wechseleinheit (z.B. die Einbringvorrichtung oder die Bewegungsmittel) elektrisch ansteuert und somit die Bewegung der mobilen Wechseleinheit steuern kann, um die mobile Wechseleinheit zu navigieren.

Unter einem Navigieren der mobilen Wechseleinheit zu einer ersten Position kann beispielsweise verstanden werden, dass eine Steuervorrichtung der mobilen Wechseleinheit die Bewegungsmittel (z.B. einen Motorantrieb und Lenkmittel) der mobilen Wechseleinheit derart ansteuert, dass sich die mobile Wechseleinheit von einer gegenwärtigen Position zu der ersten Position bewegt Zum Beispiel bewegt sich die mobile Wechseleinheit zumindest teilweise ferngesteuert oder autonom fahrend zur ersten Position, wobei sie beispielsweise Sensoren wie Kameras, Ultraschallsensoren oder Infrarotsensoren verwendet, um Hindernisse auf dem Weg zur ersten Position zu erkennen und zu umfahren. Alternativ oder zusätzlich kann die mobile Wechseleinheit beispielsweise Ortungssensoren (z.B. ein oder mehrere GPS-Sensoren) zum Navigieren der mobilen Wechseleinheit zu der ersten Position verwenden.

Die erste Position befindet sich unterhalb eines Fahrzeugs und die mobile Wechseleinheit ist beispielsweise ausreichend flach ausgestaltet, sodass sie sich unterhalb des Fahrzeugs bewegen kann. Bei dem Fahrzeug handelt es sich zum Beispiel um ein Fahrzeug, in dem ein oder mehrere Batteriemodule ausgetauscht werden sollen. Insbesondere soll beispielsweise ein von der mobilen Wechseleinheit transportiertes Batteriemodul in das Fahrzeug eingebracht werden, um ein zuvor entleertes Batteriemodul des Fahrzeugs auszutauschen. Das Fahrzeug ist zum Beispiel ein Personenkraftwagen oder ein Lastkraftwagen und ist außerdem zumindest teilweise elektrisch angetrieben. Zum Beispiel kann es sich bei dem Fahrzeug um ein vollständig batterieelektrisch angetriebenes Fahrzeug, ein Plug-in Hybrid Fahrzeug oder ein Hybridfahrzeug handeln.

Die erste Position unterhalb des Fahrzeugs befindet sich zum Beispiel unterhalb eines Batteriemodulfachs im Unterboden des Fahrzeugs, sodass, wenn sich die mobile Wechseleinheit in der ersten Position befindet, ein auf einer Einbringvorrichtung der mobilen Wechseleinheit platziertes Batteriemodul in das Fahrzeug (z.B. in ein dafür vorgesehenes Batteriemodulfach) eingebracht werden kann. Die erste Position unterhalb des Fahrzeugs ist beispielsweise festgelegt durch GPS-Koordinaten, welche von der mobilen Wechseleinheit zum Navigieren zur ersten Position genutzt werden. In einem anderen Beispiel ist die erste Position unterhalb eines Fahrzeugs in Bezug auf das Fahrzeug festgelegt (z.B. durch einen vorgegebenen Abstand zum Fahrzeug oder zu einem Batteriemodulfach des Fahrzeugs). Beispielsweise können eine oder mehrere Bezugsmarken am Fahrzeug als Referenzpunkt in Bezug auf das Fahrzeug dienen, um die erste Position in Bezug auf das Fahrzeug festzulegen (z.B. um eine besonders genaue Positionierung der mobilen Wechseleinheit zu ermöglichen).

Das Bestimmen zumindest einer Einbringvorrichtung der mobilen Wechseleinheit kann beispielsweise als ein Auswählen einer Einbringvorrichtung verstanden werden. Zum Beispiel umfasst die mobile Wechseleinheit eine Vielzahl an Einbringvorrichtungen, wobei das Bestimmen einer Einbringvorrichtung beispielsweise ein Auswählen einer Einbringvorrichtung aus der Vielzahl an Einbringvorrichtungen der mobilen Wechseleinheit umfasst Beispielweise wird die Einbringvorrichtung gemäß einer vorgegebenen Reihenfolge (z.B. einer Reihenfolge, in welcher sämtliche Einbringvorrichtungen der mobilen Wechseleinheit nacheinander ausgewählt werden sollen) bestimmt In einem weiteren Beispiel wird die Einbringvorrichtung bestimmt in Abhängigkeit von einem Batteriemodul, welches auf der Einbringvorrichtung platziert ist Beispielsweise wird basierend auf einer Information, die ein in das Fahrzeug einzubringendes Batteriemodul kennzeichnet, eine entsprechende Einbringvorrichtung bestimmt, auf welcher das gekennzeichnete Batteriemodul platziert ist. Zu diesem Zweck sind in einem elektronischen Speicher der Vorrichtung beispielsweise Information darüber abgespeichert, auf welcher Einbringvorrichtung einer möglichen Vielzahl an Einbringvorrichtungen der mobilen Wechseleinheit welches jeweilige Batteriemodul platziert ist

In einem weiteren Beispiel kann das Bestimmen zumindest einer Einbringvorrichtung auf einer Batteriemodulinformation basieren. Eine solche Batteriemodulinformation kann beispielsweise anzeigen, auf welcher Einbringvorrichtung der mobilen Wechseleinheit welches Batteriemodul platziert ist Zusätzlich oder alternativ kann eine Batteriemodulinformation ein Batteriemodul kennzeichnen, welches in das Fahrzeug eingebracht werden soll.

In einem weiteren Beispiel kann das Bestimmen zumindest einer Einbringvorrichtung auf einer Fahrzeuginformation basieren, wobei die Fahrzeuginformation beispielsweise das Fahrzeug kennzeichnet, unter welchem sich mobile Wechseleinheit in der ersten Position befindet und in welches ein auf einer Einbringvorrichtung der mobilen Wechseleinheit platziertes Batteriemodul eingebracht werden soll.

Die mobile Wechseleinheit weist zumindest eine Einbringvorrichtung auf, wobei eine solche Einbringvorrichtung dazu eingerichtet ist, ein auf der Einbringvorrichtung platziertes Batteriemodul in das Fahrzeug, unterhalb dessen sich die mobile Wechseleinheit in der ersten Position befindet, einzubringen. Zum Beispiel ist die Einbringvorrichtung eingerichtet, ein auf der Einbringvorrichtung platziertes Batteriemodul anzuheben und somit in das Fahrzeug einzubringen. Dementsprechend kann die Einbringvorrichtung beispielsweise als Hubvorrichtung verstanden werden.

Zum Beispiel umfasst eine Einbringvorrichtung der mobilen Wechseleinheit eine Plattform, auf welcher ein Batteriemodul platziert werden kann. Darüber hinaus umfasst die Einbringvorrichtung beispielsweise einen Hubmechanismus, welcher dazu eingerichtet ist, die Plattform und ein darauf platziertes Batteriemodul anzuheben. Ein solcher Hubmechanismus kann beispielsweise ein hydraulisches System, einen elektrischen Motor, einen Scherenmechanismus, ein Teleskopausleger und/oder weitere Mechanismen umfassen.

Das Einbringen des Batteriemoduls in das Fahrzeug umfasst zum Beispiel ein Einsetzen des Batteriemoduls in ein Batteriemodulfach im Unterboden des Fahrzeugs. Als Teil des Einbringens oder anschließend an das Einbringen des Batteriemoduls in das Fahrzeug kann das Batteriemodul beispielsweise im Fahrzeug befestigt (z.B. fixiert) werden, beispielsweise indem das Batteriemodul in eine Haltevorrichtung (welche z.B. einen Sperrmechanismus umfasst) des Fahrzeugs gleitet und dort festgehalten wird.

Zum Beispiel handelt es sich bei dem einzubringenden Batteriemodul um ein aufgeladenes Batteriemodul, welches ein zuvor entleertes Batteriemodul im Fahrzeug ersetzt. Beispielsweise wird ein solches entleertes Batteriemodul aus dem Fahrzeug entnommen, bevor das auf der Einbringvorrichtung platzierte Batteriemodul in das Fahrzeug eingebracht wird. Zu diesem Zweck kann die mobile Wechseleinheit beispielsweise zumindest eine Entnahmevorrichtung aufweisen.

Ein Batteriemodul kann beispielsweise als ein Bestandteil eines Batteriestapels (z.B. eines Batteriestacks) verstanden werden. Zum Beispiel kann ein einzelnes Batteriemodul ein oder mehrere Batteriezellen (z.B. Lithium-Ionen-Batteriezellen) enthalten, welche zum Beispiel dem Antriebsmotor des Fahrzeugs elektrische Energie bereitstellen.

Zum Beispiel umfasst das Bewirken des Einbringens des auf der bestimmten zumindest einen Einbringvorrichtung platzierten Batteriemoduls in das Fahrzeug ein Ansteuern der im vorherigen Schritt bestimmten Einbringvorrichtung durch die Vorrichtung, sodass beispielsweise ein Hubmechanismus dieser bestimmten Einbringvorrichtung aktiviert wird und somit bewirkt wird, dass dieser Hubmechanismus das auf der Plattform der Einbringvorrichtung platzierte Batteriemodul anhebt und in das Fahrzeug einbringt

In einem Beispiel, in dem in einem vorherigen Schritt mehr als eine Einbringvorrichtung der mobilen Wechseleinheit bestimmt wurden, wird beispielsweise für jede der bestimmten Einbringvorrichtungen nacheinander ein Einbringen des auf der jeweiligen Einbringvorrichtung platzierten Batteriemoduls in das Fahrzeug bewirkt

Vorteilhafterweise ermöglicht es die Vorrichtung gemäß der vorliegenden Offenbarung somit, ein oder mehrere Batteriemodule in ein Fahrzeug vorteilhaft einzubringen und beispielsweise zuvor entleerte Batteriemodule auszutauschen, ohne dabei auf eine fest installierte Batterieaustauschstation angewiesen zu sein. Stattdessen wird die mobile Wechseleinheit genutzt, welche sich unter das betreffende Fahrzeug bewegen kann. Vorteilhafterweise kann das betreffende Fahrzeug für den Zeitraum des Batterieaustauschs zum Beispiel auf einem herkömmlichen Stellplatz (z.B. ein öffentlicher Parkplatz) abgestellt werden. Das betreffende Fahrzeug muss insbesondere nicht für den Austauschvorgang auf einen dafür fest installierten Stellplatz einer Batterietauschstation abgestellt werden und nach dem Austauschvorgang von einem solchen fest installierten Stellplatz wegbewegt werden.

Wenn es sich beispielsweise bei dem Fahrzeug um einen LKW handelt, muss dieser LKW für den Austausch eines Batteriemoduls nicht bewegt werden, sodass vorteilhafterweise mögliche Ruhezeiten des Fahrers des LKW nicht gestört werden. Wenn die mobile Wechseleinheit beispielsweise mehrere Batterieaustauschvorgänge bei mehreren LKW durchführt, können diese LKW vorteilhafterweise auf herkömmlichen Stellplätzen und beispielsweise in einem normal üblichen Abstand zueinander geparkt werden. Auf diese Weise wird gegenüber dem Einsatz von fest installierten Batterieaustauschstationen oder fest installierten, elektrischen Ladestationen durch die Verwendung der mobilen Wechseleinheit Platz eingespart. Für einen derartigen Batterieaustausch an mehreren LKW genügt vorteilhafterweise bereits eine einzelne mobile Wechseleinheit. Bei der Verwendung von herkömmlichen Ladestationen oder Batterieaustauschstationen wäre dagegen eine Vielzahl an Stationen erforderlich, um ein Bewegen der LKW vor und nach dem Aufladen/dem Austausch der Batteriemodule zu vermeiden. Der Aufwand für die Installation solcher herkömmlichen Stationen wird mithilfe der mobilen Wechseleinheit vorteilhafterweise vermieden.

Weitere Vorteile der beispielhaften Aspekte der vorliegenden Offenbarung werden nachfolgend anhand beispielhafter Ausführungsformen beschrieben, deren Offenbarung für die Vorrichtung, das Verfahren und das Computerprogramm der vorliegenden Offenbarung gleichermaßen gelten soll.

In einer beispielhaften Ausführungsform gemäß der vorliegenden Offenbarung weist die mobile Wechseleinheit einschließlich der zumindest einen Einbringvorrichtung eine Vielzahl an Einbringvorrichtungen auf, wobei die Einbringvorrichtungen jeweils eingerichtet sind zum Einbringen eines auf der jeweiligen Einbringvorrichtung platzierten Batteriemoduls, und wobei die Mittel der Vorrichtung gemäß der vorliegenden Offenbarung ferner eingerichtet sind zum:
- Bestimmen zumindest einer weiteren Einbringvorrichtung aus der Vielzahl an Einbringvorrichtung; und
- Bewirken des Einbringens eines weiteren, auf der bestimmten zumindest einen weiteren Einbringvorrichtung platzierten, Batteriemoduls in das Fahrzeug.

Zum Beispiel kann wie oben beschrieben neben dem Bestimmen zumindest einer Einbringvorrichtung weiterhin das Bestimmen zumindest einer weiteren Einbringvorrichtung erfolgen. Demnach können beispielsweise eine erste Einbringvorrichtung, eine zweite Einbringvorrichtung und ferner weitere Einbringvorrichtungen bestimmt werden. Wie oben für das Bestimmen der zumindest einen Einbringvorrichtung beschrieben kann auch das Bestimmen der zumindest einen weiteren Einbringvorrichtung auf einer oder auf mehreren Informationen (z.B. auf einer Batteriemodulinformation oder einer Fahrzeuginformation) basieren.

Die Einbringvorrichtungen der Vielzahl von Einbringvorrichtungen der mobilen Wechseleinheit sind zum Beispiel hintereinander und/oder nebeneinander auf der mobilen Wechseleinheit angeordnet, wobei sich die Einbringvorrichtungen beispielsweise in einer Ebene auf der mobilen Wechseleinheit angeordnet befinden. Zum Beispiel umfasst die mobile Wechseleinheit zwei, vier, sechs oder darüber hinaus noch weitere Einbringvorrichtungen, auf denen jeweilige Batteriemodule platziert werden können. Beispielsweise sollen die auf den jeweiligen Einbringvorrichtung platzierten Batteriemodule alle in ein bestimmtes Fahrzeug eingebracht werden. In einem anderen Beispiel sind die auf den jeweiligen Einbringvorrichtung platzierten Batteriemodulen für mehrere Fahrzeuge bestimmt, wobei diese mehreren Fahrzeuge nacheinander von der mobilen Wechseleinheit angefahren werden, um die entsprechenden Batteriemodule einzubringen.

Zum Beispiel umfasst das Bewirken des Einbringens des auf der bestimmten zumindest einen weiteren Einbringvorrichtung platzierten Batteriemoduls in das Fahrzeug ein Ansteuern der im vorherigen Schritt bestimmten einen weiteren Einbringvorrichtung, sodass beispielsweise ein Hubmechanismus dieser bestimmten weiteren Einbringvorrichtung aktiviert wird und somit bewirkt wird, dass dieser Hubmechanismus das auf der Plattform der weiteren Einbringvorrichtung platzierte Batteriemodul anhebt und in das Fahrzeug einbringt

Indem mehrere Batteriemodule einzeln von mehreren jeweiligen Einbringvorrichtung in das Fahrzeug eingebracht werden, kann die mobile Wechseleinheit vorteilhafterweise eine möglichst niedrige Höhe aufweisen und dennoch eine Vielzahl an Batteriemodulen transportieren. Demnach kann sich die mobile Wechseleinheit unterhalb eines anderen Fahrzeugs (z.B. ein Personenkraftwagen oder ein Lastkraftwagen) bewegen, selbst wenn sie dabei eine Vielzahl von Batteriemodulen transportiert.

In einer beispielhaften Ausführungsform sind die Mittel der Vorrichtung gemäß der vorliegenden Offenbarung ferner eingerichtet zum:
- Navigieren der mobilen Wechseleinheit, nach dem Einbringen des zumindest einen Batteriemoduls in das Fahrzeug und vor dem Einbringen des zumindest einen weiteren Batteriemoduls in das Fahrzeug, von der ersten Position zu einer zweiten Position unterhalb des Fahrzeugs.

Zum Beispiel befindet sich die mobile Wechseleinheit vor dem Fahrzeug und während des Einbringens des zumindest einen Batteriemoduls in der ersten Position unterhalb des Fahrzeugs, sodass sich die bestimmte, zumindest eine Einbringvorrichtung unter einem Batteriemodulfach im Unterboden des Fahrzeugs befindet Wenn sich beispielsweise die mobile Wechseleinheit in der ersten Position befindet, kann das auf der zumindest einen Einbringvorrichtung der mobilen Wechseleinheit platzierte Batteriemodul durch Anheben der Plattform der Einbringvorrichtung in das Batteriemodulfach eingebracht werden.

Nach einem solchen Einbringen des zumindest einen Batteriemoduls kann die mobile Wechseleinheit zu einer zweiten Position unterhalb des Fahrzeugs navigiert werden, bevor das zumindest eine weitere Batteriemodul in das Fahrzeug eingebracht wird. Dabei ist diese zweite Position beispielsweise so gewählt, dass sich die bestimmte, zumindest eine weitere Einbringvorrichtung unter einem Batteriemodulfach im Unterboden des Fahrzeugs befindet Wenn sich beispielsweise die mobile Wechseleinheit in der zweiten Position befindet, kann das auf der zumindest einen weiteren Einbringvorrichtung der mobilen Wechseleinheit platzierte weitere Batteriemodul durch Anheben der Plattform der weiteren Einbringvorrichtung in das Batteriemodulfach eingebracht werden. Beispielsweise wird das weitere Batteriemodul auf diese Weise innerhalb des Batteriemodulfachs unterhalb des zuvor eingebrachten zumindest einen Batteriemoduls eingebracht.

Wie die erste Position kann die zweite Position beispielsweise durch GPS-Koordinaten festgelegt sein, welche von der mobilen Wechseleinheit zum Navigieren zur zweiten Position genutzt werden. In einem anderen Beispiel ist die zweite Position unterhalb eines Fahrzeugs in Bezug auf das Fahrzeug festgelegt (z.B. durch einen vorgegebenen Abstand zum Fahrzeug oder zu einem Batteriemodulfach des Fahrzeugs). Beispielsweise können eine oder mehrere Bezugsmarken am Fahrzeug als Referenzpunkt in Bezug auf das Fahrzeug dienen, um die zweite Position in Bezug auf das Fahrzeug festzulegen (z.B. um eine besonders genaue Positionierung der mobilen Wechseleinheit zu ermöglichen).

Vorteilhafterweise können durch Navigieren der mobilen Wechseleinheit von der ersten zur zweiten Position zwischen dem Einbringen des zumindest einen und des weiteren Batteriemoduls die beiden Batteriemodule derart in das Fahrzeug eingebracht werden, dass sie untereinander (z.B. in Form eines Batteriestapels) innerhalb eines Batteriemodulfachs des Fahrzeugs angeordnet sind. Die derart übereinander angeordneten Batteriemodule befinden sich während des Transports durch die mobile Wechseleinheit allerdings vorteilhafterweise auf unterschiedlichen Einbringvorrichtungen, sodass die Gesamthöhe der beladenen mobilen Wechseleinheit verringert werden und ein Bewegen unterhalb des Fahrzeugs ermöglicht werden kann.

In einer beispielhaften Ausführungsform sind die Mittel der Vorrichtung gemäß der vorliegenden Offenbarung ferner eingerichtet zum:
- Bewirken, nach dem Einbringen des zumindest einen Batteriemoduls, des Einbringens eines zumindest einen weiteren, auf der bestimmten zumindest einen Einbringvorrichtung platzierten, Batteriemoduls in das Fahrzeug.

Zum Beispiel befindet sich die mobile Wechseleinheit beim Einbringen des zumindest einen Batteriemoduls und auch beim Einbringen des einen weiteren Batteriemoduls in der ersten Position unterhalb eines Batteriemodulfachs des Fahrzeugs, sodass das weitere Batteriemodul auf diese Weise innerhalb des Batteriemodulfachs unterhalb des zuvor eingebrachten zumindest einen Batteriemoduls eingebracht wird. Zum Beispiel wird nach dem Einbringen des zumindest einen Batteriemoduls die zumindest eine Einbringvorrichtung mit dem einen weiteren Batteriemodul neu beladen, bevor das weitere Batteriemodul mit der zumindest einen Einbringvorrichtung in das Fahrzeug eingebracht wird. Beispielsweise wird die mobile Wechseleinheit zu diesem Zweck nach dem Einbringen des zumindest einen Batteriemoduls zu einer Batteriemodulstation navigiert, an welcher ein Beladen der mobilen Wechseleinheit mit dem weiteren Batteriemodul erfolgt, insbesondere auf derselben Einbringvorrichtung, auf der das zuvor eingebrachte Batteriemodul platziert war. Zum Beispiel wird die mobile Wechseleinheit anschließend wieder zu der ersten Position unterhalb des Fahrzeugs navigiert, bevor das eine weitere Batteriemodul in das Fahrzeug eingebracht wird. Beispielsweise wird das weitere Batteriemodul auf diese Weise innerhalb eines Batteriemodulfachs unterhalb des zuvor eingebrachten zumindest einen Batteriemoduls eingebracht.

Indem mehrere Batteriemodule von derselben Einbringvorrichtung insbesondere einzeln in das Fahrzeug eingebracht werden, kann die mobile Wechseleinheit vorteilhafterweise eine möglichst niedrige Höhe aufweisen, da auf der entsprechenden Einbringvorrichtung jeweils nur ein einzelnes Batteriemodul platziert ist Demnach kann sich die mobile Wechseleinheit beispielsweise unterhalb eines anderen Fahrzeugs (z.B. ein Personenkraftwagen oder ein Lastkraftwagen) bewegen, selbst wenn sie dabei insgesamt eine Vielzahl von Batteriemodulen transportiert und in das Fahrzeug einbringt Vorteilhafterweise reicht es dazu bereits aus, wenn die mobile Wechseleinheit beispielsweise nur eine Einbringvorrichtung aufweist Weiterhin können, indem sich die mobile Wechseleinheit beispielsweise beim Einbringen des zumindest einen Batteriemoduls und des einen weiteren Batteriemoduls in der ersten Position unterhalb des Fahrzeugs befindet, die beiden Batteriemodule derart in das Fahrzeug eingebracht werden, dass sie untereinander (z.B. in Form eines Batteriestapels) innerhalb eines Batteriemodulfachs des Fahrzeugs angeordnet sind.

In einer beispielhaften Ausführungsform gemäß der vorliegenden Offenbarung sind die zumindest eine Einbringvorrichtung und/oder die Vielzahl an Einbringvorrichtungen der mobilen Wechseleinheit eingerichtet, das zumindest eine Batteriemodul und das zumindest eine weitere Batteriemodul derart in das Fahrzeug einzubringen, dass das zumindest eine Batteriemodul und das zumindest eine weitere Batteriemodul innerhalb des Fahrzeugs einen einzelnen Batteriestapel bilden.

Zum Beispiel kann ein Batteriestapel (z.B. ein Batteriestack) verstanden werden als zumindest zwei untereinander angeordnete Batteriemodule, wobei diese untereinander angeordneten Batteriemodule beispielsweise elektrisch miteinander verbunden sind. Beispielsweise kann ein solcher Batteriestapel innerhalb des Fahrzeugs (z.B. in einem Batteriemodulfach des Fahrzeugs) gebildet werden, indem zunächst das zumindest eine Batteriemodul in das Fahrzeug eingebracht wird und anschließend unterhalb des zumindest einen Batteriemoduls das zumindest eine weitere Batteriemodul eingebracht wird.

Vorteilhafterweise lassen sich mit einem Batteriestapel, der von mehreren einzelnen Batteriemodulen gebildet wird, verschiedene Leistungsbedarfe eines Fahrzeugs abdecken. Zum Beispiel genügt bereits ein Batteriemodul für den Betrieb des Fahrzeugs, und durch zusätzliche Batteriemodule eines Batteriestapels kann darüber hinaus dem Fahrzeug zusätzliche elektrische Energie bereitgestellt werden, sodass beispielsweise die Reichweite des Fahrzeugs erhöht wird.

In einer beispielhaften Ausführungsform gemäß der vorliegenden Offenbarung sind das zumindest eine Batteriemodul und das zumindest eine weitere Batteriemodul innerhalb des Batteriestapels untereinander angeordnet und/oder elektrisch miteinander verbunden.

Zum Beispiel sind das zumindest eine Batteriemodul und das zumindest eine weitere Batteriemodul elektrisch miteinander verbunden, indem sie elektrisch in Reihe oder parallel miteinander verbunden sind (z.B. um eine gewünschte elektrische Spannung oder elektrische Kapazität zu erreichen). Eine elektrische Verbindung der beiden Batteriemodule kann beispielsweise durch zusätzliche Verbindungsstrukturen der Batteriemodule erreicht werden, welche die Batteriemodule physisch miteinander verbinden und einen elektrischen Kontakt zwischen den Batteriemodulen gewährleisten. Beispielsweise kann das Fahrzeug, in welches die Batteriemodule eingebracht werden, ein Batteriemanagementsystem umfassen, welches den Zustand der Batteriemodule überwacht und beispielsweise den Entladevorgang steuert.

In einer beispielhaften Ausführungsform sind die Mittel der Vorrichtung gemäß der vorliegenden Offenbarung ferner eingerichtet zum:
- Bewirken der Entnahme eines Batteriemoduls aus dem Fahrzeug vor dem Einbringen des zumindest einen und/oder des zumindest einen weiteren Batteriemoduls in das Fahrzeug, wobei die mobile Wechseleinheit zumindest eine Entnahmevorrichtung zur Entnahme eines Batteriemoduls aus dem Fahrzeug aufweist.

Zum Beispiel ist eine Entnahmevorrichtung aufgebaut wie eine Einbringvorrichtung, sodass beispielsweise eine Einbringvorrichtung einer mobilen Wechseleinheit zugleich als Entnahmevorrichtung der mobilen Wechseleinheit eingesetzt werden kann oder umgekehrt. Zum Beispiel umfasst eine Entnahmevorrichtung der mobilen Wechseleinheit eine Plattform, auf welcher ein Batteriemodul platziert werden kann. Darüber hinaus umfasst die Entnahmevorrichtung beispielsweise einen Hubmechanismus, welcher dazu eingerichtet ist, die Plattform und ein darauf platziertes Batteriemodul abzusenken. Ein solcher Hubmechanismus kann beispielsweise ein hydraulisches System, einen elektrischen Motor, einen Scherenmechanismus, ein Teleskopausleger und/oder weitere Mechanismen umfassen.

Die Entnahme des Batteriemoduls aus dem Fahrzeug umfasst zum Beispiel eine Entnahme des Batteriemoduls aus einem Batteriemodulfach im Unterboden des Fahrzeugs. Als Teil der Entnahme oder vor der Entnahme des Batteriemoduls aus dem Fahrzeug kann das Batteriemodul beispielsweise im Fahrzeug gelöst (z.B. aus einer Befestigung im Fahrzeug gelöst) werden, beispielsweise indem das Batteriemodul aus einer Haltevorrichtung (welche z.B. einen Sperrmechanismus umfasst) des Fahrzeugs entnommen wird.

Zum Beispiel handelt es sich bei dem einzubringenden Batteriemodul um ein entleertes Batteriemodul im Fahrzeug, welches durch ein aufgeladenes Batteriemodul ersetzt wird. Beispielsweise wird ein solches entleertes Batteriemodul aus dem Fahrzeug entnommen, bevor das auf einer Einbringvorrichtung platzierte Batteriemodul in das Fahrzeug eingebracht wird.

Vor dem Bewirken der Entnahme erfolgt beispielsweise ein Navigieren der mobilen Wechseleinheit zu einer Entnahmeposition unterhalb des Fahrzeugs, sodass die Entnahme eines Batteriemoduls erfolgt, während sich die mobile Wechseleinheit in der Entnahmeposition befindet.

In einer beispielhaften Ausführungsform sind die Mittel der Vorrichtung gemäß der vorliegenden Offenbarung ferner eingerichtet zum:
- Erhalten zumindest einer Batteriemodulinformation, wobei die Batteriemodulinformation ein Batteriemodul repräsentiert, und wobei das Bestimmen der zumindest einen Einbringvorrichtung zumindest teilweise auf der erhaltenen Batteriemodulinformation basiert

Die Batteriemodulinformation kann als eine elektronische Information verstanden werden, welche beispielsweise in elektronischer Form (z.B. binär) kodiert ist Insbesondere kann die Batteriemodulinformation erhalten werden, indem sie von anderen Mitteln (z.B. Kommunikationsmitteln oder Sensormitteln) an die Mittel der Vorrichtung übertragen wird.

Zum Beispiel repräsentiert die Batteriemodulinformation ein Batteriemodul, indem sie eine Kennung des Batteriemoduls beinhaltet, wobei eine solche Kennung (z.B. eine Bezeichnung oder eine Adresse) des Batteriemoduls das Batteriemodul eindeutig identifiziert. Beispielsweise ist das Batteriemodul, das durch eine Batteriemodulinformation repräsentiert wird, basierend auf dieser Batteriemodulinformation bestimmbar (z.B. identifizierbar). Zusätzlich zu der Repräsentation eines Batteriemoduls kann die Batteriemodulinformation weitere Informationen (z.B. weitere Parameter) anzeigen.

In einem Beispiel repräsentiert (z.B. identifiziert oder kennzeichnet) die erhaltene Batteriemodulinformation ein Batteriemodul, welches in das Fahrzeug eingebracht werden soll. Beispielsweise weist die mobile Wechseleinheit eine Vielzahl an Einbringvorrichtungen auf, auf welchen jeweilige Batteriemodule platziert sind. Eine erhaltene Batteriemodulinformation repräsentiert dann beispielsweise ein bestimmtes Batteriemodul, welches in das Fahrzeug eingebracht werden soll, aus der Vielzahl an Batteriemodulen. In einem solchen Beispiel können die auf den übrigen Einbringvorrichtungen platzierten Batteriemodule beispielsweise für ein anderes Fahrzeug bestimmt sein und daher zu einem späteren Zeitpunkt in dieses andere Fahrzeug eingebracht werden.

Das Bestimmen der zumindest einen Einbringvorrichtung basiert zumindest teilweise auf der erhaltenen Batteriemodulinformation. Wenn beispielsweise die Batteriemodulinformation ein Batteriemodul repräsentiert, welches in das Fahrzeug eingebracht werden soll, wird beispielsweise jene Einbringvorrichtung basierend auf der Batteriemodulinformation bestimmt, auf welcher das von der Batteriemodulinformation repräsentierten Batteriemodul platziert ist. In einem solchen Beispiel kann das Bestimmen der Einbringvorrichtung zusätzlich auf einer Information (welche z.B. in einem elektronischen Speicher der Vorrichtung abgespeichert ist) basieren, welche für die Vielzahl der Einbringvorrichtung der mobilen Wechseleinheit anzeigt, ob und welches Batteriemodul auf der jeweiligen Einbringvorrichtung platziert ist.

Vorteilhafterweise kann basierend auf der Batteriemodulinformation gezielt ein bestimmtes Batteriemodul ausgewählt werden, welches anschließend in das Fahrzeug eingebracht werden kann. Bei dem Transport einer Vielzahl von Batteriemodulen auf der mobilen Wechseleinheit muss das Einbringen der auf den verschiedenen Einbringvorrichtungen platzierten Batteriemodulen nicht notwendigerweise einer vorgegebenen Reihenfolge entsprechen, sondern kann beispielsweise mittels der Batteriemodulinformation gezielt gesteuert (z.B. ferngesteuert) werden.

In einem anderen Beispiel repräsentiert (z.B. identifiziert oder kennzeichnet) die erhaltene Batteriemodulinformation ein Batteriemodul, welches auf einer bestimmten Einbringvorrichtung platziert ist In einem solchen Beispiel kann die Batteriemodulinformation beispielsweise eine Kennung (z.B. eine Bezeichnung oder eine Adresse) des Batteriemoduls repräsentieren und zusätzlich (z.B. zumindest implizit) eine Kennung (z.B. eine Bezeichnung oder eine Adresse) der Einbringvorrichtung repräsentieren, auf welcher das Batteriemodul platziert ist Zusätzlich zu einer solchen Batteriemodulinformation kann eine Information vorliegen (welche z.B. in einem elektronischen Speicher der Vorrichtung abgespeichert ist), welche ein bestimmtes Batteriemodul kennzeichnet, welches in das Fahrzeug eingebracht werden soll. Beispielsweise zeigt dann die Batteriemodulinformation an, auf welcher Einbringvorrichtung der mobilen Wechseleinheit das Batteriemodul, welches in das Fahrzeug eingebracht werden, platziert ist, sodass diese Einbringvorrichtung basierend auf der Batteriemodulinformation bestimmt werden kann.

Vorteilhafterweise kann die Vorrichtung demnach mittels der Batteriemodulinformation zum Beispiel für eine Vielzahl von Einbringvorrichtungen der mobilen Wechseleinheit erkennen, ob und welches Batteriemodul auf einer jeweiligen Einbringvorrichtung platziert ist

In einer beispielhaften Ausführungsform umfasst die Vorrichtung gemäß der vorliegenden Offenbarung ferner Sensormittel eingerichtet zum Erhalten der Batteriemodulinformation von dem durch die Batteriemodulinformation repräsentierten Batteriemodul.

Zum Beispiel wird eine Batteriemodulinformation durch einen optisch erfassbaren Code (z.B. ein Barcode oder ein QR-Code) repräsentiert, welcher auf dem Batteriemodul aufgebracht (z.B. auf einem Gehäuse des Batteriemoduls aufgedruckt) ist. Die Sensormittel der Vorrichtung können dann beispielsweise einen Codescanner (z.B. einen optischen Sensor wie eine Kamera) umfassen, welcher den optisch erfassbaren Code von dem Batteriemodul abscannt. In einem anderen Beispiel können die Sensoren einen elektronischen Empfänger umfassen, welcher beispielsweise die Batteriemodulinformation in Form eines elektrischen Signals per Nahbereichsfunkkommunikation (z.B. Bluetooth, NFC oder RFID) von dem Batteriemodul empfängt. Zum Beispiel ist das Batteriemodul dann mit einem elektrischen Sender ausgestattet, welcher die Batteriemodulinformation sendet, sodass sie von den Sensormitteln der mobilen Wechseleinheit empfangen werden kann.

Beispielsweise sind die Sensormittel jeweils an oder zumindest in der Nähe einer jeweiligen Einbringvorrichtung der mobilen Wechseleinheit angeordnet Zum Beispiel befindet sich an jeder Plattform einer Einbringvorrichtung, auf welcher ein entsprechendes Batteriemodul platziert sein kann, ein Codescanner oder ein elektrischer Empfänger als Teil der Sensormittel. Falls auf einer bestimmten Einbringvorrichtung ein Batteriemodul platziert sein sollte, wird beispielsweise der auf diesem Batteriemodul aufgebrachte, optisch erfassbare Code von einem Codescanner, welcher an der Plattform der Einbringvorrichtung angeordnet ist, gescannt und an die Vorrichtung als Batteriemodulinformation übermittelt. Beispielsweise ist in der Vorrichtung eine Information dazu abgespeichert, welcher Codescanner an welcher Plattform der jeweiligen Einbringvorrichtung angeordnet ist Indem die Batteriemodulinformation an der Vorrichtung von einem bestimmten Codescanner empfangen wird, zeigt die Batteriemodulinformation (z.B. zumindest implizit) zusätzlich an, auf welcher Einbringvorrichtung das durch die Batteriemodulinformation repräsentierte Batteriemodul platziert ist

In einer beispielhaften Ausführungsform umfasst die Vorrichtung gemäß der vorliegenden Offenbarung ferner Kommunikationsmittel eingerichtet zum Empfangen der Batteriemodulinformation von einem Backend-Server.

Zum Beispiel wird die Batteriemodulinformation von Kommunikationsmitteln der Vorrichtung über ein drahtloses Kommunikationsnetzwerk empfangen. Beispielsweise umfassen dann die Kommunikationsmittel der Vorrichtung eine Mobilfunkschnittstelle, welche die Batteriemodulinformation von dem Backend-Server über ein Mobilfunknetzwerk empfangen kann. Der Backend-Server kann beispielsweise als Verwaltungsserver verstanden werden, an welchem bestimmt wird, in welchem Fahrzeug welches Batteriemodul durch eine mobile Wechseleinheit (z.B. aus einer Vielzahl an mobilen Wechseleinheiten) eingebracht und/oder entnommen werden soll. Eine vom Backend-Server an die Vorrichtung übertragene Batteriemodulinformation repräsentiert demnach beispielsweise ein Batteriemodul, welches von dem Backend-Server zuvor bestimmt wurde und welches in das Fahrzeug eingebracht werden soll.

In einer beispielhaften Ausführungsform sind die Mittel der Vorrichtung gemäß der vorliegenden Offenbarung ferner eingerichtet zum:
- Erhalten einer Fahrzeuginformation, wobei die Fahrzeuginformation das Fahrzeug repräsentiert und wobei das Bestimmen der zumindest einen Einbringvorrichtung zumindest teilweise auf der erhaltenen Fahrzeuginformation basiert

Die Fahrzeuginformation kann als eine elektronische Information verstanden werden, welche beispielsweise in elektronischer Form (z.B. binär) kodiert ist Insbesondere kann die Fahrzeuginformation erhalten werden, indem sie von anderen Mitteln (z.B. Kommunikationsmitteln oder Sensormitteln) an die Mittel der Vorrichtung übertragen wird. Zum Beispiel wird die Fahrzeuginformation von einem Backend-Server oder von dem Fahrzeug, welches durch die Fahrzeuginformation repräsentiert wird, an die Vorrichtung übertragen. Zum Beispiel repräsentiert die Fahrzeuginformation ein Fahrzeug, indem sie eine Kennung des Fahrzeugs beinhaltet, wobei eine solche Kennung (z.B. eine Bezeichnung oder eine Adresse) des Fahrzeugs das Fahrzeug eindeutig identifiziert. Beispielsweise ist das Fahrzeug, das durch eine Fahrzeuginformation repräsentiert wird, basierend auf dieser Fahrzeuginformation bestimmbar (z.B. identifizierbar). Zusätzlich zu der Repräsentation eines Fahrzeugs kann die Fahrzeuginformation weitere Informationen (z.B. weitere Parameter) anzeigen.

Insbesondere repräsentiert die Fahrzeuginformation jenes Fahrzeug, unterhalb dessen sich die erste Position befindet und in welches die Vorrichtung nach dem Bestimmen der zumindest einen Einbringvorrichtung zumindest ein Batteriemodul einbringt Beispielsweise wird die Fahrzeuginformation gemeinsam mit einer Positionsinformation erhalten (z.B. gemeinsam von einem Backend-Server empfangen), welche die erste Position anzeigt und welche zum Navigieren der mobilen Wechseleinheit zur ersten Position genutzt wird. In einem anderen Beispiel wird die Fahrzeuginformation nach dem Navigieren oder während des Navigierens zu der ersten Position erhalten.

Zumindest teilweise basierend auf der Fahrzeuginformation wird beispielsweise die zumindest eine Einbringvorrichtung bestimmt Zum Beispiel transportiert die mobile Wechseleinheit eine Vielzahl an Batteriemodulen, wobei diese für unterschiedliche Fahrzeuge bestimmt sind. Wenn dann die Vorrichtung beispielsweise eine Fahrzeuginformation erhält, welche ein Fahrzeug repräsentiert, kann die Vorrichtung bestimmen, welches der transportieren Batteriemodule für dieses Fahrzeug bestimmt und in dieses Fahrzeug einzubringen ist Anschließend kann die Vorrichtung bestimmen (z.B. basierend auf einer Batteriemodulinformation), auf welcher Einbringvorrichtung ein einzubringendes Batteriemodul platziert ist und somit die zumindest eine Einbringvorrichtung bestimmen. Ein Bestimmen der zumindest einen Einbringvorrichtung kann beispielsweise zusätzlich auf einer erhaltenen Batteriemodulinformation basierend, zum Beispiel wenn diese zusätzliche Batteriemodulinformation ein Batteriemodul anzeigt, welches in ein bestimmtes Fahrzeug (z.B. in das von der Fahrzeuginformation repräsentierte Fahrzeug) eingebracht werden soll.

Vorteilhafterweise kann die Vorrichtung basierend auf der erhaltenen Fahrzeuginformation ein bestimmtes Fahrzeug erkennen, in welches ein Batteriemodul eingebracht werden soll. Dies ist beispielsweise hilfreich, wenn die mobile Wechseleinheit nacheinander mehrere Fahrzeuge ansteuert und dementsprechend eine Vielzahl an Batteriemodulen transportiert, wobei die Batteriemodule jeweils für unterschiedliche Fahrzeuge bestimmt sind. Anhand der Fahrzeuginformation kann die Vorrichtung in solchen Fällen beispielsweise erkennen, um welches Fahrzeug es sich bei einem bevorstehenden Einbringen eines Batteriemoduls handelt und somit für dieses Fahrzeug das entsprechende Batteriemodul bestimmen.

In einer beispielhaften Ausführungsform umfasst die Vorrichtung gemäß der vorliegenden Offenbarung ferner Kommunikationsmittel eingerichtet zum Empfangen der Fahrzeuginformation von dem Fahrzeug oder von einem Backend-Server.

Zum Beispiel wird die Fahrzeuginformation von den Kommunikationsmitteln der Vorrichtung per Nahbereichsfunkkommunikation (z.B. Bluetooth, NFC oder RFID) von dem Fahrzeug empfangen, wobei die Fahrzeuginformation dieses Fahrzeug repräsentiert. In diesem Fall umfassen die Kommunikationsmittel der Vorrichtung beispielsweise eine Nahbereichsfunkkommunikationsschnittstelle zum Empfangen der Fahrzeuginformation, und die Fahrzeuginformation wird von einer entsprechenden Nahbereichsfunkkommunikationsschnittstelle des Fahrzeugs gesendet

Beispielsweise ist die vom Fahrzeug ausgesendete Fahrzeuginformation nur in einem räumlich begrenzten Bereich um das Fahrzeug herum empfangbar, sodass die Vorrichtung die Fahrzeuginformation beispielweise nur dann empfängt, wenn sich die mobile Wechseleinheit dem Fahrzeug nähert (z.B. während des Navigierens der mobilen Wechseleinheit zur ersten Position unterhalb des Fahrzeugs). Vorteilhafterweise kann die Vorrichtung dann beispielsweise anhand der vom Fahrzeug empfangenen Fahrzeuginformation erkennen, welchem Fahrzeug sich die mobile Wechseleinheit nähert und an welchem Fahrzeug das nächste Einbringen eines Batteriemoduls ansteht. Basierend auf der empfangenen Fahrzeuginformation kann dann beispielsweise ein einzubringendes Batteriemodul und eine entsprechende Einbringvorrichtung bestimmt werden.

In einem weiteren Beispiel wird die Fahrzeuginformation von Kommunikationsmitteln der Vorrichtung über ein drahtloses Kommunikationsnetzwerk empfangen. Beispielsweise umfassen dann die Kommunikationsmittel der Vorrichtung eine Mobilfunkschnittstelle, welche die Fahrzeuginformation von dem Backend-Server über ein Mobilfunknetzwerk empfangen kann. Der Backend-Server kann beispielsweise als Verwaltungsserver verstanden werden, an welchem bestimmt wird, in welches Fahrzeug welches Batteriemodul durch eine mobile Wechseleinheit (z.B. aus einer Vielzahl an mobilen Wechseleinheiten) eingebracht und/oder entnommen werden soll. Eine vom Backend-Server an die Vorrichtung übertragene Fahrzeuginformation repräsentiert demnach beispielsweise ein Fahrzeug, welches von dem Backend-Server zuvor bestimmt wurde und in welches als nächstes ein Batteriemodul eingebracht werden soll. Vorteilhafterweise kann die empfangene Fahrzeuginformation zum Bestimmen einer Einbringvorrichtung genutzt werden, insbesondere wenn die mobile Wechseleinheit eine Vielzahl an Batteriemodulen zugleich transportiert und damit nacheinander mehrere Fahrzeuge abfährt, um die Batteriemodule in vom Backend-Server bestimmte Fahrzeuge einzubringen.

In einer beispielhaften Ausführungsform umfasst die Vorrichtung gemäß der vorliegenden Offenbarung ferner:
- Bewegungsmittel zum Bewegen der mobilen Wechseleinheit umfassend einen Motorantrieb und/oder eine Mehrzahl von Rädern; und/oder
- die zumindest eine Einbringvorrichtungen; und/oder
- die zumindest eine Entnahmevorrichtung; und/oder
- Kommunikationsmittel zur Kommunikation mit dem Backend-Server und/oder dem Fahrzeug.

Die Vorrichtung gemäß der vorliegenden Offenbarung kann ein Teil der mobilen Wechseleinheit sein und beispielsweise als Steuervorrichtung der mobilen Wechseleinheit verstanden werden, welche mit Einzelkomponenten und unterschiedlichen Mitteln der mobilen Wechseleinheit verbunden ist Darüber hinaus kann die Vorrichtung zumindest einige Mittel oder sämtliche Mittel der mobilen Wechseleinheit umfassen. So kann die Vorrichtung beispielsweise neben einer Steuervorrichtung der mobilen Wechseleinheit Bewegungsmittel (z.B. einen Motorantrieb und/oder eine Mehrzahl von Rädern), Einbringvorrichtung(en), Entnahmevorrichtung(en) und/oder Kommunikationsmittel (z.B. eine Nahbereichsfunkkommunikationsschnittstelle und/oder eine Mobilfunkschnittstelle) der mobilen Wechseleinheit umfassen. Zum Beispiel kann die Vorrichtung sämtliche Mittel der mobilen Wechseleinheit umfassen und somit beispielsweise der mobilen Wechseleinheit entsprechen.

Weiterhin wird gemäß der vorliegenden Offenbarung ein System offenbart, welches zumindest die Vorrichtung gemäß der vorliegenden Offenbarung und die mobile Wechseleinheit umfasst, wobei das System beispielsweise weiterhin das Fahrzeug und/oder den Backend-Server umfassen kann. Sollte die Vorrichtung gemäß der vorliegenden Offenbarung beispielsweise der mobilen Wechseleinheit entsprechen, umfasst das offenbarte System zumindest die Vorrichtung sowie das Fahrzeug und/oder den Backend-Server.

Die oben beschriebenen Ausführungsbeispiele und beispielhaften Ausgestaltungen der vorliegenden Offenbarung sollen auch in allen Kombinationen miteinander offenbart verstanden werden. Insbesondere gilt die Offenbarung eines Verfahrensschrittes auch als Offenbarung von Mitteln zur Durchführung des jeweiligen Verfahrensschritts. Ebenso gilt die Offenbarung von Mitteln zur Durchführung eines Verfahrensschritts auch als Offenbarung des Verfahrensschritts selbst

Weitere vorteilhafte beispielhafte Ausgestaltungen der vorliegenden Offenbarung sind der folgenden detaillierten Beschreibung einiger beispielhafter Ausführungsformen insbesondere in Verbindung mit den Figuren zu entnehmen. Die beiliegenden Figuren sollen jedoch nur dem Zwecke der Verdeutlichung, nicht aber zur Bestimmung des Schutzbereiches der Ansprüche dienen. Die beiliegenden Zeichnungen sind nicht notwendigerweise maßstabsgetreu und sollen lediglich das allgemeine Konzept der vorliegenden Offenbarung beispielhaft widerspiegeln. Insbesondere sollen Merkmale, die in den Figuren enthalten sind, keineswegs als notwendiger Bestandteil der vorliegenden Erfindung erachtet werden.

Es zeigen:
- Fig. 1a und 1b: schematische Darstellungen einer beispielhaften Ausführungsform gemäß der vorliegenden Offenbarung;
- Fig. 2: eine schematische Darstellung einer beispielhaften Ausführungsform von Sensormitteln gemäß der vorliegenden Offenbarung;
- Fig. 3a, 3b und 3c: schematische Darstellungen einer weiteren beispielhaften Ausführungsform gemäß der vorliegenden Offenbarung;
- Fig. 4: ein Flussdiagramm einer bespielhaften Ausführungsform des Verfahrens gemäß der vorliegenden Offenbarung;
- Fig. 5: eine schematische Darstellung einer beispielhaften Ausführungsform der Vorrichtung gemäß der vorliegenden Offenbarung; und
- Fig. 6: beispielhafte Ausführungsformen von Speichermedien.

### Detaillierte Beschreibung einiger beispielhafter Ausführungsformen

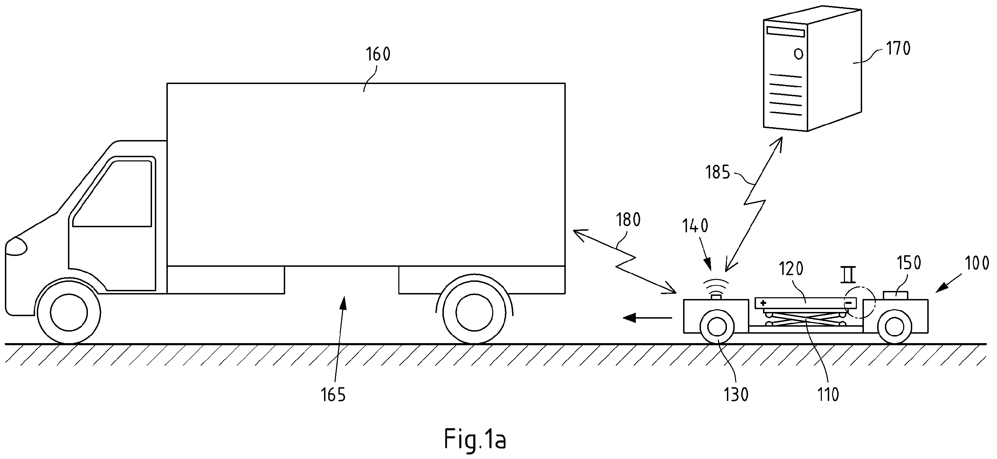

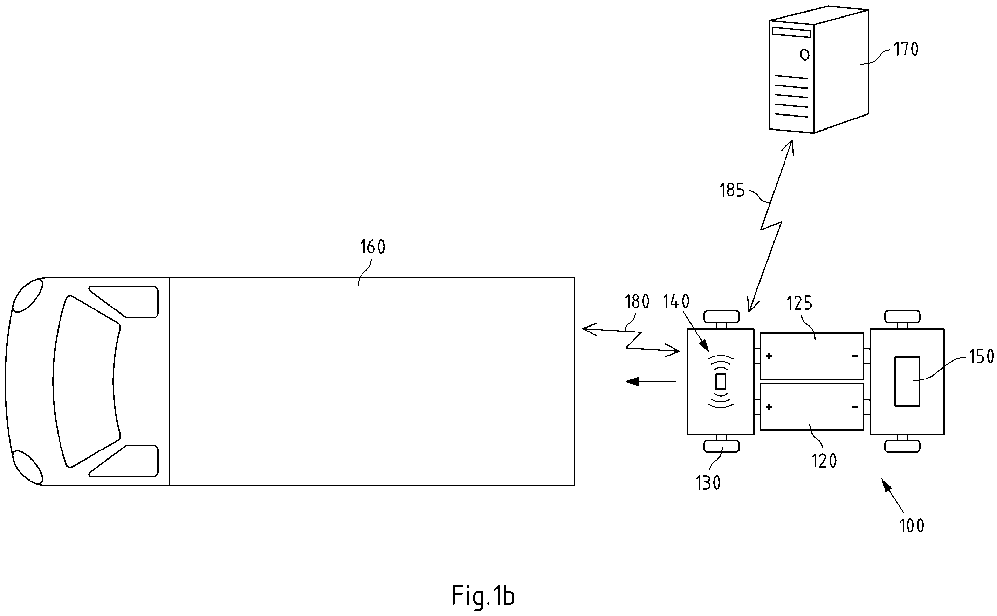

Fig. 1a und Fig. 1b zeigen schematische Darstellungen einer beispielhaften Ausführungsform gemäß der vorliegenden Offenbarung.
Fig. 1a zeigt beispielhaft eine mobile Wechseleinheit 100, welche zu einer ersten Position unterhalb eines Fahrzeugs 160 navigiert wird.

Die mobile Wechseleinheit 100 ist als unbemanntes Transportfahrzeug (z.B. ein mobiler Roboter) gezeigt, wobei die mobile Wechseleinheit 100 unter anderem zumindest eine Einbringvorrichtung 110 mit einem darauf platzierten Batteriemodul 120 umfasst Des Weiteren umfasst die mobile Wechseleinheit 100 Bewegungsmittel in Form mehrerer Räder 130 und Kommunikationsmittel 140 (z.B. eine Antenne) zur drahtlosen Funkkommunikation. Insbesondere weist die mobile Wechseleinheit 100 eine Steuervorrichtung 150 auf, welche mit den übrigen Komponenten der mobilen Wechseleinheit 100 verbunden ist. Die Steuervorrichtung 150 kann demnach als ein Beispiel für die Vorrichtung gemäß der vorliegenden Offenbarung verstanden werden.

Die Einbringvorrichtung 110 umfasst einen Hubmechanismus, welcher dazu eingerichtet ist, die Plattform und das darauf platzierte Batteriemodul 120 anzuheben. Dieser Hubmechanismus ist beispielhaft als Scherenmechanismus gezeigt, kann allerdings auch auf eine andere Weise implementiert sein. Das Einbringen des Batteriemoduls 120 in das Fahrzeug 160 umfasst zum Beispiel ein Einsetzen des Batteriemoduls 120 in ein Batteriemodulfach 165 im Unterboden des Fahrzeugs 160. Als Teil des Einbringens oder anschließend an das Einbringen des Batteriemoduls in das Fahrzeug 160 kann das Batteriemodul 120 beispielsweise im Fahrzeug 160 befestigt (z.B. fixiert) werden, indem das Batteriemodul 120 in eine Haltevorrichtung (welche z.B. einen Sperrmechanismus umfasst) des Fahrzeugs 160 gleitet und dort festgehalten wird. Bei dem einzubringenden Batteriemodul 120 handelt es sich um ein aufgeladenes Batteriemodul, welches ein zuvor entleertes Batteriemodul im Fahrzeug 160 ersetzt Beispielsweise wird ein solches entleertes Batteriemodul aus dem Fahrzeug 160 entnommen, bevor das auf der Einbringvorrichtung 110 platzierte Batteriemodul 120 in das Fahrzeug 160 eingebracht wird. Zu diesem Zweck kann die mobile Wechseleinheit 100 beispielsweise zumindest eine Entnahmevorrichtung aufweisen (nicht gezeigt in Fig. 1a).

Bei dem Fahrzeug 160 handelt es sich um ein Fahrzeug, in dem ein oder mehrere Batteriemodule ausgetauscht werden sollen. Insbesondere soll das von der mobilen Wechseleinheit 100 transportierte Batteriemodul 120 in das Fahrzeug 160 eingebracht werden, zum Beispiel um ein zuvor entleertes Batteriemodul des Fahrzeugs 160 auszutauschen. Das Fahrzeug 160 ist beispielhaft als Lastkraftwagen dargestellt, welcher zumindest teilweise elektrisch angetrieben wird.

Die Kommunikationsmittel 140 können eine beispielsweise drahtlose Kommunikation zwischen der mobilen Wechseleinheit 100 und dem Fahrzeug 160 ermöglichen, indem sie eine drahtlose Kommunikationsverbindung 180 zwischen der mobilen Wechseleinheit 100 und dem Fahrzeug 160 bereitstellen. Die drahtlose Kommunikationsverbindung 180 basiert beispielsweise auf optischer Übertragung und/oder mittels Kommunikation, die auf elektrischen, magnetischen oder elektromagnetischen Signalen oder Feldern beruht, insbesondere Nahbereichs-Kommunikation (z.B. beruhend auf Bluetooth oder WLAN). Zum Beispiel empfängt die Steuervorrichtung 150 anhand der Kommunikationsmittel 140 über die Kommunikationsverbindung 180 vom Fahrzeug 160 eine Fahrzeuginformation, welche eine Kennung des Fahrzeugs 160 beinhaltet

Darüber hinaus zeigt Fig. 1a einen Backend-Server 170, welcher beispielsweise als Verwaltungsserver verstanden werden kann. Zum Beispiel wird am Backend-Server 170 bestimmt wird, in welchem Fahrzeug welches Batteriemodul durch die mobile Wechseleinheit 100 (z.B. aus einer Vielzahl an mobilen Wechseleinheiten) eingebracht und/oder entnommen werden soll. Eine vom Backend-Server 170 an die mobile Wechseleinheit 100 übertragene Batteriemodulinformation repräsentiert demnach beispielsweise das Batteriemodul 120, welches von dem Backend-Server 170 zuvor bestimmt wurde und welches in das Fahrzeug 160 eingebracht werden soll. Eine solche Batteriemodulinformation kann anhand der Kommunikationsmittel 140 der mobilen Wechseleinheit 100 über eine drahtlose Kommunikationsverbindung 185 empfangen werden. Beispielsweise umfassen dann die Kommunikationsmittel 140 eine Mobilfunkschnittstelle, welche die Batteriemodulinformation und/oder eine Fahrzeuginformation von dem Backend-Server 170 über die drahtlose Kommunikationsverbindung 185 empfangen kann.

Fig. 1b zeigt eine Draufsicht des in Fig. 1a dargestellten Fahrzeugs 160 und der mobilen Wechseleinheit 100. In dieser Ansicht ist beispielhaft erkennbar, dass die mobile Wechseleinheit 100 zwei Einbringvorrichtungen nebeneinander (z.B. auf gleicher Höhe) aufweist, wobei auf einer Einbringvorrichtung ein Batteriemodul 120 und auf der anderen Einbringvorrichtung das weitere Batteriemodul 125 platziert ist. Beispielsweise sollen die auf den jeweiligen Einbringvorrichtung platzierten Batteriemodule 120 und 125 beide in das Fahrzeug 160 eingebracht werden, während sie in einem anderen Beispiel jeweils für ein anderes Fahrzeug bestimmt sind, wobei diese mehreren Fahrzeuge nacheinander von der mobilen Wechseleinheit 100 angefahren werden, um die entsprechenden Batteriemodule 120 und 125 einzubringen.

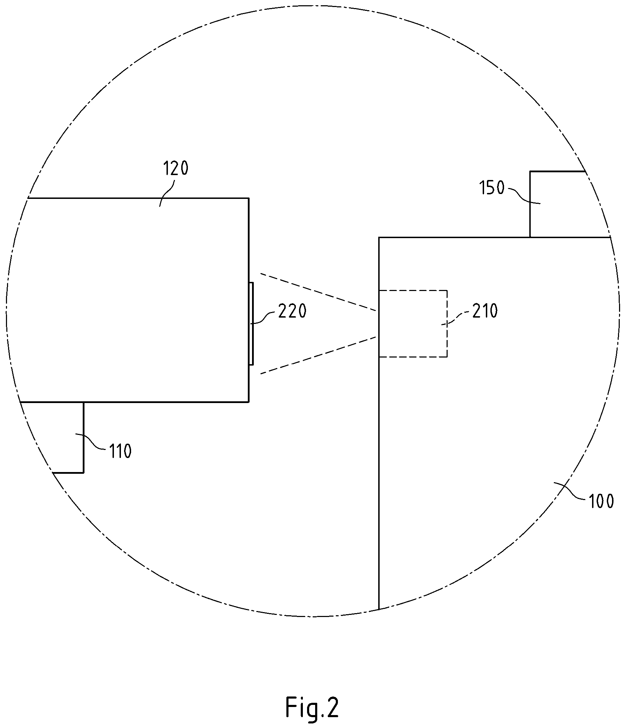

Fig. 2 zeigt eine schematische Darstellung einer beispielhaften Ausführungsform von Sensormitteln 210 gemäß der vorliegenden Offenbarung. Insbesondere zeigt die Fig. 2 einen Ausschnitt der Fig. 1 (mit "II" gekennzeichnet in Fig. 1) und darin die mobile Wechseleinheit 100, die Steuervorrichtung 150, die Einbringvorrichtung 110 und das auf der Einbringvorrichtung 110 platzierte Batteriemodul 120. Zusätzlich zeigt die Fig. 2 einen Codescanner 210 (z.B. einen optischen Sensor wie eine Kamera) als Sensormittel und einen auf dem Gehäuse des Batteriemoduls 120 aufgedruckten Barcode 220. Der Codescanner ist beispielsweise mit der Steuervorrichtung 150 verbunden oder kann als Teil der Steuervorrichtung 150 verstanden werden. Die durch den Barcode 220 repräsentierte Batteriemodulinformation beinhaltet eine Kennung (z.B. eine Bezeichnung oder eine Adresse), welche das Batteriemodul 120 eindeutig identifiziert Die Steuervorrichtung 150 kann die durch den Barcode 220 repräsentierte Batteriemodulinformation erhalten, indem der Barcode 220 von dem Codescanner 210 elektronisch erfasst und anschließend an die Steuervorrichtung 150 weitergeleitet wird.

Alternativ oder zusätzlich zum Codescanner 210 können die Sensormittel auch einen elektronischen Empfänger umfassen, welcher die Batteriemodulinformation in Form eines elektrischen Signals per Nahbereichsfunkkommunikation (z.B. Bluetooth, NFC oder RFID) von dem Batteriemodul 120 empfängt

Fig. 2 zeigt beispielhaft einen einzelnen Codescanner 220 und ein einzelnes, auf einer Einbringvorrichtung 110 platziertes Batteriemodul 120. Zusätzlich kann die mobile Wechseleinheit 100 mehrere Einbringvorrichtungen und mehrere Codescanner umfassen (z.B. für jede Einbringvorrichtung einen jeweiligen Codescanner). Solche Codescanner können jeweils an oder zumindest in der Nähe der jeweiligen Einbringvorrichtung der mobilen Wechseleinheit 100 angeordnet sein. Zum Beispiel befindet sich an jeder Plattform einer Einbringvorrichtung, auf welcher ein entsprechendes Batteriemodul platziert sein kann, ein Codescanner. Falls auf einer bestimmten Einbringvorrichtung ein Batteriemodul platziert sein sollte (wie in Fig. 2 für das Batteriemodul 120 beispielhaft dargestellt), wird beispielsweise der auf diesem Batteriemodul aufgebrachte Barcode von einem Codescanner, welcher an der Plattform der Einbringvorrichtung angeordnet ist, gescannt und an die Steuervorrichtung 150 als Batteriemodulinformation übermittelt. An der Steuervorrichtung 150 ist beispielsweise hinterlegt (z.B. in einem elektronischen Speicher der Steuervorrichtung 150 abgespeichert), welcher Codescanner an welcher jeweiligen Einbringvorrichtung der mobilen Wechseleinheit 100 angeordnet ist Indem die Batteriemodulinformation an der Steuervorrichtung 150 von einem bestimmten Codescanner empfangen wird, zeigt die Batteriemodulinformation (z.B. zumindest implizit) zusätzlich an, auf welcher Einbringvorrichtung das durch die Batteriemodulinformation repräsentierte Batteriemodul platziert ist

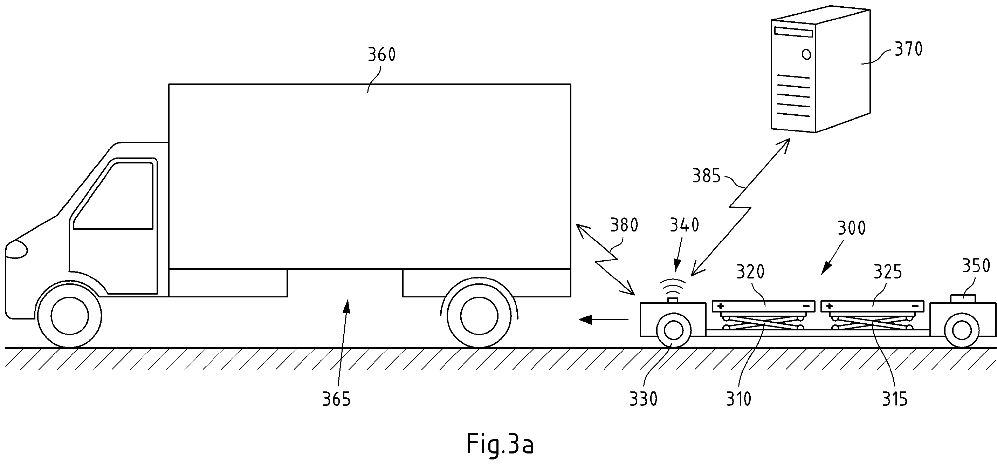

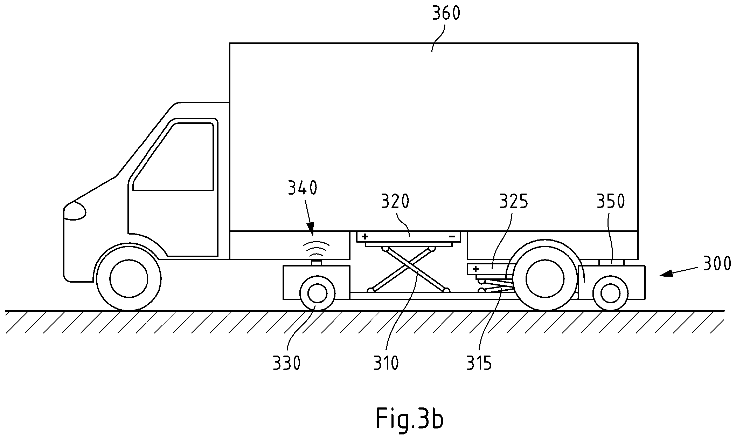

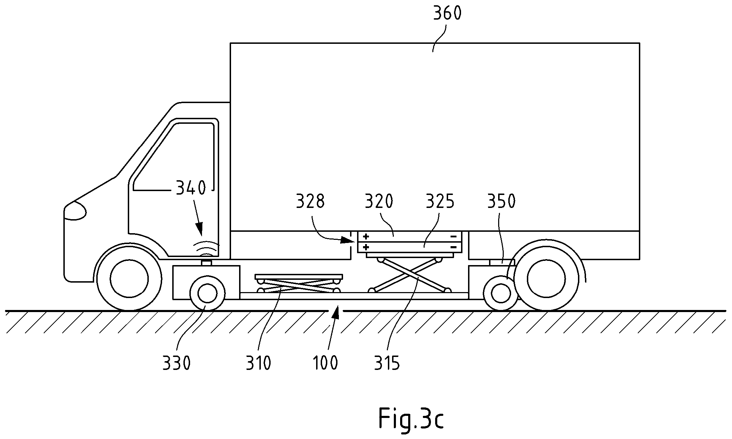

Fig. 3a, 3b und 3c zeigen schematische Darstellungen einer weiteren beispielhaften Ausführungsform gemäß der vorliegenden Offenbarung.

Fig. 3a zeigt ähnlich der Fig. 1a eine mobile Wechseleinheit 300 als unbemanntes Transportfahrzeug (z.B. ein mobiler Roboter), wobei die mobile Wechseleinheit 300 eine Einbringvorrichtung 310 mit einem darauf platzierten Batteriemodul 320 und außerdem eine weitere Einbringvorrichtung 315 mit einem darauf platzierten weiteren Batteriemodul 325 umfasst Des Weiteren umfasst die mobile Wechseleinheit 300 Bewegungsmittel in Form mehrerer Räder 330 und Kommunikationsmittel 340 (z.B. eine Antenne) zur drahtlosen Funkkommunikation. Insbesondere weist die mobile Wechseleinheit eine Steuervorrichtung 350 auf, welche mit den übrigen Komponenten der mobilen Wechseleinheit 300 verbunden ist Die Steuervorrichtung 350 kann demnach als ein Beispiel für die Vorrichtung gemäß der vorliegenden Offenbarung verstanden werden.

Fig. 3a zeigt beispielhaft die mobile Wechseleinheit 300, welche von der Steuervorrichtung 350 zu einer ersten Position unterhalb eines Fahrzeugs 360 navigiert wird. Fig. 3b zeigt die mobile Wechseleinheit 300 zu einem späteren Zeitpunkt als in Fig. 3a, wobei sich die mobile Wechseleinheit 300 gemäß Fig. 3b in der ersten Position unterhalb des Fahrzeugs 360 befindet, während das Batteriemodul 320 mit der Einbringvorrichtung 310 in das Fahrzeug 360 eingebracht wird. Fig. 3c zeigt die mobile Wechseleinheit 300 zu einem späteren Zeitpunkt als in Fig. 3b, wobei sich die mobile Wechseleinheit 300 gemäß Fig. 3c in einer zweiten Position unterhalb des Fahrzeugs 360 befindet, während das weitere Batteriemodul 325 mit der weiteren Einbringvorrichtung 315 in das Fahrzeug 360 eingebracht wird.

Nach einem in Fig. 3b gezeigten Einbringen des Batteriemoduls 320 kann die mobile Wechseleinheit 300 demnach zu einer zweiten Position unterhalb des Fahrzeugs 360 navigiert werden, bevor wie in Fig. 3c gezeigt das weitere Batteriemodul 325 in das Fahrzeug 360 eingebracht wird. Dabei ist die erste Position so gewählt, dass sich die Einbringvorrichtung 310 unter dem Batteriemodulfach 365 im Unterboden des Fahrzeugs 360 befindet. Die zweite Position ist so gewählt, dass sich die Einbringvorrichtung 315 unter dem Batteriemodulfach 365 im Unterboden des Fahrzeugs 360 befindet Wenn sich demnach die mobile Wechseleinheit 300 in der zweiten Position befindet (siehe Fig. 3c), kann das auf der weiteren Einbringvorrichtung 315 platzierte weitere Batteriemodul 325 durch Anheben der Plattform der Einbringvorrichtung 315 in das Batteriemodulfach 365 eingebracht werden, sodass das weitere Batteriemodul 325 innerhalb des Batteriemodulfachs 365 unterhalb des zuvor eingebrachten Batteriemoduls 320 eingebracht wird.

Vorteilhafterweise können durch Navigieren der mobilen Wechseleinheit 300 von der ersten zur zweiten Position die beiden Batteriemodule 320 und 325 derart in das Fahrzeug 360 eingebracht werden, dass sie untereinander in Form eines Batteriestapels 328 innerhalb des Batteriemodulfachs 365 des Fahrzeugs 360 angeordnet sind. Die derart übereinander angeordneten Batteriemodule 320 und 325 befinden sich während des Transports durch die mobile Wechseleinheit 300 allerdings vorteilhafterweise auf unterschiedlichen Einbringvorrichtungen 310 und 315, sodass die Gesamthöhe der beladenen mobilen Wechseleinheit 300 verringert werden und ein Bewegen unterhalb des Fahrzeugs 360 ermöglicht wird.

Innerhalb des Batteriestapels 328 sind die untereinander angeordneten Batteriemodule 320 und 325 elektrisch miteinander verbunden, indem sie beispielsweise elektrisch in Reihe oder parallel miteinander verbunden sind (z.B. um eine gewünschte elektrische Spannung oder elektrische Kapazität zu erreichen). Eine elektrische Verbindung der beiden Batteriemodule 320 und 325 kann beispielsweise durch zusätzliche Verbindungsstrukturen der Batteriemodule erreicht werden.

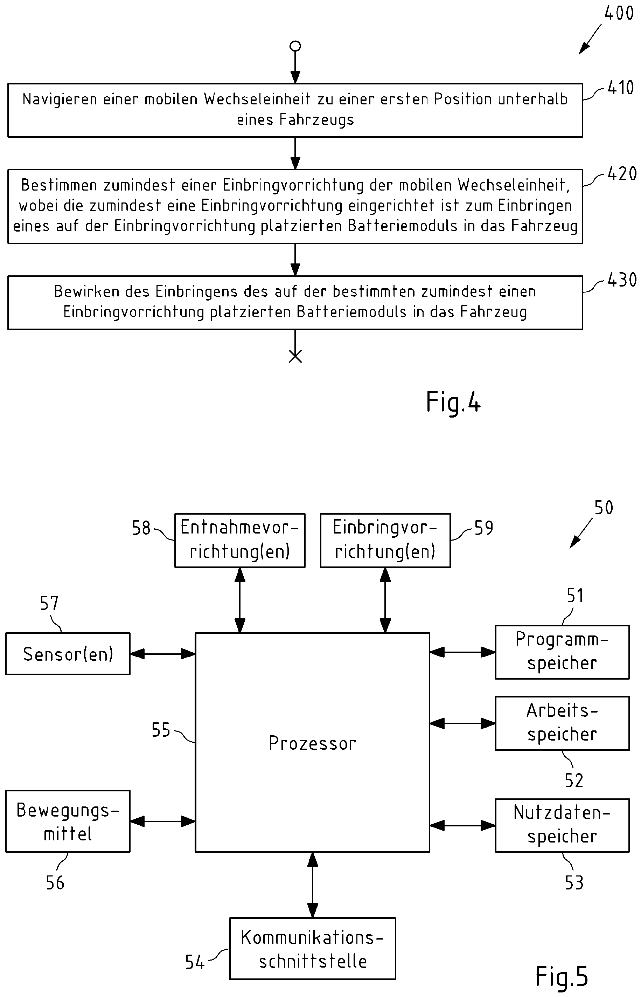

Fig. 4 zeigt ein Flussdiagramm einer beispielhaften Ausführungsform eines Verfahrens 400 gemäß der vorliegenden Offenbarung. Nachfolgend werden die Verfahrensschritte 410, 420 und 430 des Verfahrens 400 beispielhaft in Bezug auf die in Fig. 1a und in Fig. 1b gezeigte beispielhafte Ausführungsform beschrieben. Dabei wird beispielhaft angenommen, dass die Verfahrensschritte 410, 420 und 430 von der Steuervorrichtung 150 der mobilen Wechseleinheit 100 durchgeführt werden.

Schritt 410 umfasst ein Navigieren einer mobilen Wechseleinheit zu einer ersten Position unterhalb eines Fahrzeugs.

Zum Beispiel steuert die Steuervorrichtung 150 die Bewegungsmittel 130 der mobilen Wechseleinheit 100 derart an, dass sich die mobile Wechseleinheit 100 von ihrer gegenwärtigen Position zu der ersten Position bewegt. Die mobile Wechseleinheit 100 bewegt sich zumindest teilweise autonom fahrend zur ersten Position, wobei die Steuervorrichtung 150 beispielsweise Sensoren wie Kameras, Ultraschallsensoren oder Infrarotsensoren verwendet, um Hindernisse auf dem Weg zur ersten Position zu erkennen und zu umfahren. Alternativ oder zusätzlich kann die mobile Wechseleinheit 100 Ortungssensoren (z.B. ein oder mehrere GPS-Sensoren) zum Navigieren der mobilen Wechseleinheit 100 zu der ersten Position verwenden.

Schritt 420 umfasst ein Bestimmen zumindest einer Einbringvorrichtung der mobilen Wechseleinheit, wobei die zumindest eine Einbringvorrichtung eingerichtet ist zum Einbringen eines auf der Einbringvorrichtung platzierten Batteriemoduls in das Fahrzeug.

Zum Beispiel bestimmt die Steuervorrichtung 150 die Einbringvorrichtung 110 der mobilen Wechseleinheit 100, indem die Steuervorrichtung 150 die Einbringvorrichtung 110 auswählt Die mobile Wechseleinheit 100 umfasst beispielhaft zwei nebeneinander angeordnete Einbringvorrichtungen, wobei das Bestimmen einer Einbringvorrichtung ein Auswählen der Einbringvorrichtung 110 umfasst. Beispielsweise wird die Einbringvorrichtung 100 gemäß einer vorgegebenen Reihenfolge ausgewählt In einem weiteren Beispiel wird die Einbringvorrichtung 110 bestimmt in Abhängigkeit von dem Batteriemodul 120, welches auf der Einbringvorrichtung 110 platziert ist. Beispielsweise wird basierend auf einer Information, die das in das Fahrzeug 160 einzubringende Batteriemodul 120 kennzeichnet, die entsprechende Einbringvorrichtung 110 bestimmt, auf welcher das gekennzeichnete Batteriemodul 120 platziert ist. Zu diesem Zweck sind in einem elektronischen Speicher der Steuervorrichtung 150 beispielsweise Informationen darüber abgespeichert, auf welcher Einbringvorrichtung der beiden Einbringvorrichtungen der mobilen Wechseleinheit welches jeweilige Batteriemodul platziert ist.

In einem weiteren Beispiel kann das Bestimmen der Einbringvorrichtung 110 in Schritt 420 auf einer Batteriemodulinformation basieren, welche das Batteriemodul 120 identifiziert

Eine solche Batteriemodulinformation kann beispielsweise anzeigen, auf welcher Einbringvorrichtung der mobilen Wechseleinheit 100 welches Batteriemodul platziert ist Zum Beispiel scannt der Codescanner 210 der mobilen Wechseleinheit 100 (siehe Fig. 2) den auf das Gehäuse des Batteriemoduls 120 aufgedruckten Barcode 220, wobei der Barcode 220 eine Batteriemodulinformation repräsentiert, die eine Kennung des Batteriemoduls 120 enthält Die vom Codescanner 210 erfasste Batteriemodulinformation wird anschließend an die Steuervorrichtung 150 übertragen. In der Steuervorrichtung 150 ist eine Information dazu abgespeichert, dass der Codescanner 210 an der Plattform der Einbringvorrichtung 110 angeordnet ist, sodass die von dem Codescanner 210 an die Steuervorrichtung 150 übermittelte Batteriemodulinformation (z.B. zumindest implizit) zusätzlich anzeigt, dass das durch die Batteriemodulinformation repräsentierte Batteriemodul 120 auf der Einbringvorrichtung 110 platziert ist Beispielsweise ist in der Steuervorrichtung 150 eine Information abgespeichert, wonach das Batteriemodul 120 in das Fahrzeug 160 eingebracht werden soll. Demnach wird in Schritt 420 die Einbringvorrichtung 110 bestimmt basierend darauf, dass sich aus der Batteriemodulinformation ergibt, dass das in das Fahrzeug 160 einzubringende Batteriemodul 120 auf der Einbringvorrichtung 110 platziert ist.

Eine Batteriemodulinformation kann außerdem beispielsweise ein Batteriemodul identifizieren, welches in das Fahrzeug 160 eingebracht werden soll. Wie in Fig. 1b gezeigt weist die mobile Wechseleinheit 100 zwei Einbringvorrichtungen auf, auf welchen jeweilige Batteriemodule 120 und 125 platziert sind. Eine erhaltene Batteriemodulinformation repräsentiert dann beispielsweise das Batteriemodul 120, welches in das Fahrzeug 160 eingebracht werden soll. In einem solchen Beispiel kann das auf der übrigen Einbringvorrichtung platzierte Batteriemodul 125 beispielsweise für ein anderes Fahrzeug bestimmt sein und daher zu einem späteren Zeitpunkt in dieses andere Fahrzeug eingebracht werden. Das Bestimmen in Schritt 420 basiert dann zumindest teilweise auf der erhaltenen Batteriemodulinformation. Wenn beispielsweise die Batteriemodulinformation das Batteriemodul 120 repräsentiert, welches in das Fahrzeug 160 eingebracht werden soll, wird die Einbringvorrichtung 110 basierend auf der Batteriemodulinformation bestimmt, auf welcher das von der Batteriemodulinformation repräsentierten Batteriemodul 120 platziert ist. In einem solchen Beispiel kann das Bestimmen der Einbringvorrichtung zusätzlich auf einer Information (welche z.B. in einem elektronischen Speicher der Steuervorrichtung 150 abgespeichert ist) basieren, welche für die beiden Einbringvorrichtungen der mobilen Wechseleinheit 100 anzeigt, ob und welches Batteriemodul auf der jeweiligen Einbringvorrichtung platziert ist Zum Beispiel wird die Batteriemodulinformation von Kommunikationsmitteln 140 von dem Backend-Server 170 über ein Mobilfunknetzwerk empfangen, wobei der Backend-Server 170 als Verwaltungsserver verstanden werden kann, an welchem bestimmt wird, in welchem Fahrzeug welches Batteriemodul durch die mobile Wechseleinheit 100 (z.B. aus einer Vielzahl an mobilen Wechseleinheiten) eingebracht und/oder entnommen werden soll. Eine vom Backend-Server 170 an die Steuervorrichtung 150 übertragene Batteriemodulinformation repräsentiert demnach das Batteriemodul 120, welches von dem Backend-Server 170 zuvor bestimmt wurde und welches in das Fahrzeug 160 eingebracht werden soll.

In einem weiteren Beispiel kann das Bestimmen der Einbringvorrichtung 110 in Schritt 420 auf einer Fahrzeuginformation basieren, wobei die Fahrzeuginformation beispielsweise das Fahrzeug 160 kennzeichnet, unter welchem sich die in der ersten Position befindliche mobile Wechseleinheit 100 befindet und in welches das auf der Einbringvorrichtung 110 der mobilen Wechseleinheit 100 platzierte Batteriemodul 120 eingebracht werden soll. Die Fahrzeuginformation kann beispielsweise an der Steuervorrichtung 150 erhalten werden von dem Backend-Server 170 über ein Mobilfunknetzwerk (z.B. über die Kommunikationsverbindung 185) oder von dem Fahrzeug 160 per Nahbereichsfunkkommunikation (z.B. Bluetooth, NFC oder RFID über die Kommunikationsverbindung 180).

Schritt 430 umfasst ein Bewirken des Einbringens des auf der bestimmten zumindest einen Einbringvorrichtung platzierten Batteriemoduls in das Fahrzeug.

Zum Beispiel steuert die Steuervorrichtung 150 die in Schritt 420 bestimmte Einbringvorrichtung 110 an, sodass ein Hubmechanismus der Einbringvorrichtung 110 aktiviert wird und somit bewirkt wird, dass dieser Hubmechanismus das auf der Plattform der Einbringvorrichtung 110 platzierte Batteriemodul 120 anhebt und in das Fahrzeug 160 einbringt. In einem Beispiel, in dem in dem vorherigen Schritt 420 mehr als eine Einbringvorrichtung der mobilen Wechseleinheit 100 bestimmt wurden, wird in Schritt 430 beispielsweise für jede der bestimmten Einbringvorrichtungen nacheinander ein Einbringen des auf der jeweiligen Einbringvorrichtung platzierten Batteriemoduls in das Fahrzeug bewirkt

Fig. 5 zeigt eine schematische Darstellung einer beispielhaften Ausführungsform der Vorrichtung 50 gemäß der vorliegenden Offenbarung. Beispielsweise kann die Vorrichtung 50 als Steuervorrichtung 150 der in Fig. 1a und Fig. 1b gezeigten mobilen Wechseleinheit 100 oder als Steuervorrichtung 350 der in Fig. 3a bis 3c gezeigten mobilen Wechseleinheit 300 verstanden werden.

Die Steuervorrichtung 50 umfasst beispielhaft einen Prozessor 55. Unter einem Prozessor soll beispielsweise ein Mikroprozessor, eine Mikrokontrolleinheit, ein Mikrocontroller, ein digitaler Signalprozessor (DSP), eine Anwendungsspezifische Integrierte Schaltung (ASIC) oder ein Field Programmable Gate Array (FPGA) verstanden werden. Es versteht sich, dass die Steuervorrichtung 50 auch mehrere Prozessoren 55 umfassen kann.

Der Prozessor 55 führt Programmanweisungen aus, die in Programmspeicher 51 gespeichert sind, und speichert beispielsweise Zwischenergebnisse oder ähnliches in Arbeitsspeicher 52. Der Programmspeicher 51 enthält beispielsweise Programmanweisungen eines Computerprogramms gemäß der vorliegenden Offenbarung, das Programmanweisungen umfasst, die den Prozessor 55 veranlassen, das Verfahren gemäß der vorliegenden Offenbarung (z.B. das Verfahren 400 gemäß Fig. 4) auszuführen und/oder zu steuern, wenn der Prozessor 55 die in Programmspeicher 51 gespeicherten Programmanweisungen ausführt.

Programmspeicher 51 enthält ferner beispielsweise ein Betriebssystem der Steuervorrichtung 50, das beim Starten der Steuerungsvorrichtung 50 zumindest teilweise in Arbeitsspeicher 52 geladen und vom Prozessor 55 ausgeführt wird. Insbesondere wird beim Starten der Steuerungsvorrichtung 50 zumindest ein Teil des Kerns des Betriebssystems in den Arbeitsspeicher 52 geladen und von Prozessor 55 ausgeführt.

Ein Beispiel für ein Betriebssystem ist ein Windows -, UNIX-, Linux-, Android-, Apple iOS- und/oder MAC OS-Betriebssystem. Das Betriebssystem ermöglicht insbesondere die Verwendung der Steuervorrichtung 50 zur Datenverarbeitung. Es verwaltet beispielsweise Betriebsmittel wie den Programmspeicher 51 und den Arbeitsspeicher 52 und stellt unter anderem durch Programmierschnittstellen anderen Computerprogrammen grundlegende Funktionen zur Verfügung und steuert die Ausführung von Computerprogrammen.

Ein Programmspeicher ist beispielsweise ein nicht-flüchtiger Speicher wie ein Flash-Speicher, ein Magnetspeicher, ein EEPROM-Speicher (elektrisch löschbarer programmierbarer Nur-LeseSpeicher) und/oder ein optischer Speicher. Ein Arbeitsspeicher ist zum Beispiel ein flüchtiger oder nicht-flüchtiger Speicher, insbesondere ein Speicher mit wahlfreiem-Zugriff (RAM) wie ein statischer RAM-Speicher (SRAM), ein dynamischer RAM-Speicher (DRAM), ein ferroelektrischer RAM-Speicher (FeRAM) und/oder ein magnetischer RAM-Speicher (MRAM).

Der Nutzdatenspeicher 53 dient der Speicherung von Daten, die bei der Abarbeitung des Programms erforderlich sind. Vorliegend kann es sich dabei beispielsweise um Batteriemodulinformationen und/oder Fahrzeuginformationen handeln.

Darüber hinaus kann die Steuervorrichtung 50 mit einer Kommunikationsschnittstelle 54 der mobilen Wechseleinheit 100 (z.B. den in Fig. 1a und Fig. 1b gezeigten Kommunikationsmitteln 140) verbunden sein. Die Kommunikationsschnittstelle 54 umfasst beispielsweise eine Mobilfunkschnittstelle (z.B. zum Empfangen von Batteriemodulinformation oder Fahrzeuginformation von dem Backend-Server 170) und/oder eine Nahbereichsfunkkommunikationsschnittstelle (z.B. Bluetooth, NFC oder RFID zum Empfangen eine Batteriemodulinformation von einem Batteriemodul oder zum Empfangen einer Fahrzeuginformation von einem Fahrzeug).

Darüber hinaus ist die Steuervorrichtung 50 beispielsweise mit einen oder mehrere Sensoren 57 verbunden. Der Sensor 57 kann beispielsweise einen Codescanner (z.B. einen optischen Sensor wie eine Kamera) umfassen, welcher einen optisch erfassbaren Code abscannen kann. In einem anderen Beispiel können die Sensoren 57 einen elektronischen Empfänger umfassen, welcher eine Batteriemodulinformation in Form eines elektrischen Signals per Nahbereichsfunkkommunikation (z.B. Bluetooth, NFC oder RFID) von dem Batteriemodul empfangen kann.

Die Steuervorrichtung 50 ist außerdem mit Bewegungsmitteln 56 verbunden, wobei es sich beispielsweise um die Räder 130 der mobilen Wechseleinheit 100 und einen Lenkmechanismus dieser Räder handeln kann. Die Steuervorrichtung 50 kann diese Bewegungsmittel 56 ansteuern, um die mobile Wechseleinheit 100 zu bewegen und beispielsweise zu einer ersten Position unterhalb des Fahrzeugs 160 zu navigieren.

Die Steuervorrichtung 50 ist außerdem mit zumindest einer Entnahmevorrichtung 58 und zumindest einer Einbringvorrichtung 59 verbunden. Beispielsweise kann die Steuervorrichtung 50 die Einbringvorrichtung 59 (z.B. die Einbringvorrichtung 110 in Fig. 1a) ansteuern, sodass ein Hubmechanismus dieser bestimmten Einbringvorrichtung 59 aktiviert wird und somit bewirkt wird, dass dieser Hubmechanismus das auf einer Plattform der Einbringvorrichtung 59 platzierte Batteriemodul anhebt

Wie oben beschrieben können die Kommunikationsschnittstelle 54, die Bewegungsmittel 56, die Sensoren 57 und/oder die Entnahme- und Einbringvorrichtungen 58, 59 mit der Steuervorrichtung 50 verbunden sein, sodass sie beispielsweise von der Steuervorrichtung 50 gesteuert werden und Informationen an die Steuervorrichtung übermitteln können. In anderen Beispielen können die Kommunikationsschnittstelle 54, die Bewegungsmittel 56, die Sensoren 57 und/oder die Entnahme- und Einbringvorrichtungen 58, 59 zusätzlich als Teil der Steuervorrichtung 50 verstanden werden.

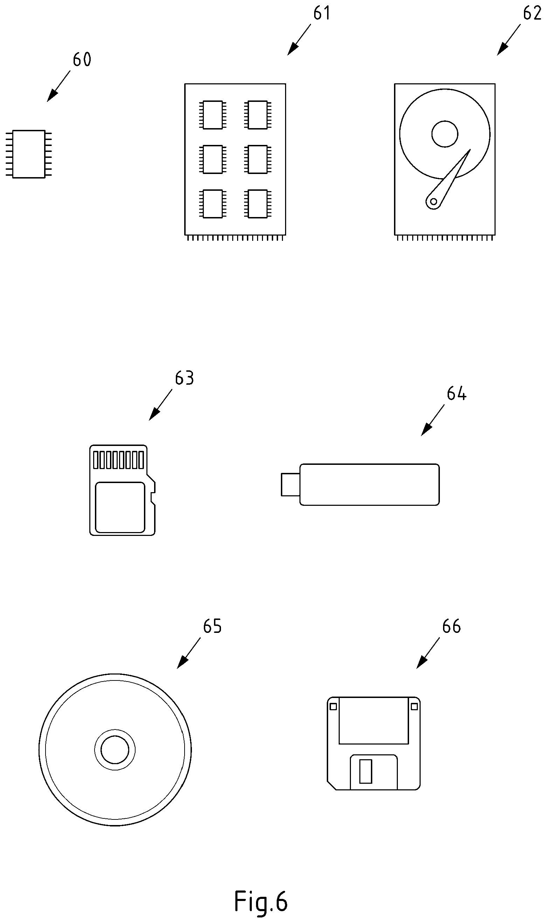

Fig. 6 zeigt beispielhafte Ausführungsformen von Speichermedien, auf denen zum Beispiel ein Computerprogramm gemäß der vorliegenden Offenbarung gespeichert sein kann. Das Speichermedium kann beispielsweise ein magnetisches, elektrisches, optisches und/oder andersartiges Speichermedium sein. Das Speichermedium kann beispielsweise Teil eines Prozessors (z.B. des Prozessors 55 der Fig. 5) sein, beispielsweise ein (nicht-flüchtiger oder flüchtiger) Programmspeicher des Prozessors oder ein Teil davon (z.B. Programmspeicher 51 in Fig. 5). Ausführungsbeispiele eines Speichermediums sind ein Flash-Speicher 60, eine SSD-Festplatte 61, eine magnetische Festplatte 62, eine Speicherkarte 63, ein Memory Stick 65 (z.B. ein USB-Stick), eine CD-ROM oder DVD 65 oder eine Diskette 66.

Die in dieser Spezifikation beschriebenen beispielhaften Ausführungsformen der vorliegenden Offenbarung sollen auch in allen Kombinationen miteinander offenbart verstanden werden. Insbesondere soll auch die Beschreibung eines von einer Ausführungsform umfassten Merkmals
- sofern nicht explizit gegenteilig erklärt - vorliegend nicht so verstanden werden, dass das Merkmal für die Funktion des Ausführungsbeispiels unerlässlich oder wesentlich ist. Die Abfolge der in dieser Offenbarung geschilderten Verfahrensschritte in den einzelnen Flussdiagrammen ist nicht zwingend, alternative Abfolgen der Verfahrensschritte sind denkbar
- soweit nicht anders angegeben. Die Verfahrensschritte können auf verschiedene Art und Weise implementiert werden, so ist eine Implementierung in Software (durch Programmanweisungen), Hardware oder eine Kombination von beidem zur Implementierung der Verfahrensschritte denkbar.

In den Patentansprüchen verwendete Begriffe wie "umfassen", "aufweisen", "beinhalten", "enthalten" und dergleichen schließen weitere Elemente oder Schritte nicht aus. Unter die Formulierung "zumindest teilweise" fallen sowohl der Fall "teilweise" als auch der Fall "vollständig". Die Formulierung "und/oder" soll dahingehend verstanden werden, dass sowohl die Alternative als auch die Kombination offenbart sein soll, also "A und/oder B" bedeutet "(A) oder (B) oder (A und B)". Eine Mehrzahl von Einheiten, Personen oder dergleichen bedeutet im Zusammenhang dieser Spezifikation mehrere Einheiten, Personen oder dergleichen. Die Verwendung des unbestimmten Artikels schließt eine Mehrzahl nicht aus. Eine einzelne Einrichtung kann die Funktionen mehrerer in den Patentansprüchen genannten Einheiten bzw. Einrichtungen ausführen. In den Patentansprüchen angegebene Bezugszeichen sind nicht als Beschränkungen der eingesetzten Mittel und Schritte anzusehen.

Die folgenden Ausführungsbeispiele werden als Teil der vorliegenden Offenbarung offenbart:
Ausführungsbeispiel 1:
   Eine Vorrichtung, umfassend Mittel eingerichtet zum:
   - Navigieren einer mobilen Wechseleinheit zu einer ersten Position unterhalb eines Fahrzeugs;
   - Bestimmen zumindest einer Einbringvorrichtung der mobilen Wechseleinheit, wobei die zumindest eine Einbringvorrichtung eingerichtet ist zum Einbringen eines auf der Einbringvorrichtung platzierten Batteriemoduls in das Fahrzeug; und
   - Bewirken des Einbringens des auf der bestimmten zumindest einen Einbringvorrichtung platzierten Batteriemoduls in das Fahrzeug.
Ausführungsbeispiel 2:
   Die Vorrichtung gemäß Ausführungsbeispiel 1, wobei die mobile Wechseleinheit einschließlich der zumindest einen Einbringvorrichtung eine Vielzahl an Einbringvorrichtungen aufweist, wobei die Einbringvorrichtungen jeweils eingerichtet sind zum Einbringen eines auf der jeweiligen Einbringvorrichtung platzierten Batteriemoduls, und wobei die Mittel der Vorrichtung ferner eingerichtet sind zum:
   - Bestimmen zumindest einer weiteren Einbringvorrichtung aus der Vielzahl an Einbringvorrichtungen; und
   - Bewirken des Einbringens eines weiteren, auf der bestimmten zumindest einen weiteren Einbringvorrichtung platzierten, Batteriemoduls in das Fahrzeug.
Ausführungsbeispiel 3:
   Die Vorrichtung gemäß Ausführungsbeispiel 2, wobei die Mittel der Vorrichtung ferner eingerichtet sind zum:
   - Navigieren der mobilen Wechseleinheit, nach dem Einbringen des zumindest einen Batteriemoduls in das Fahrzeug und vor dem Einbringen des zumindest einen weiteren Batteriemoduls in das Fahrzeug, von der ersten Position zu einer zweiten Position unterhalb des Fahrzeugs.
Ausführungsbeispiel 4:
   Die Vorrichtung gemäß Ausführungsbeispiel 1, wobei die Mittel der Vorrichtung ferner eingerichtet sind zum:
   - Bewirken, nach dem Einbringen des zumindest einen Batteriemoduls, des Einbringens eines zumindest einen weiteren, auf der bestimmten zumindest einen Einbringvorrichtung platzierten, Batteriemoduls in das Fahrzeug.
Ausführungsbeispiel 5:
   Die Vorrichtung gemäß einem der Ausführungsbeispiele 1 bis 4, wobei die zumindest eine Einbringvorrichtung und/oder die Vielzahl an Einbringvorrichtungen der mobilen Wechseleinheit eingerichtet sind, dass zumindest eine Batteriemodul und das zumindest eine weitere Batteriemodul derart in das Fahrzeug einzubringen, dass das zumindest eine Batteriemodul und das zumindest eine weitere Batteriemodul innerhalb des Fahrzeugs einen einzelnen Batteriestapel bilden.
Ausführungsbeispiel 6:
   Die Vorrichtung gemäß Ausführungsbeispiel 5, wobei das zumindest eine Batteriemodul und das zumindest eine weitere Batteriemodul innerhalb des Batteriestapels untereinander angeordnet sind und/oder elektrisch miteinander verbunden sind.
Ausführungsbeispiel 7:
   Die Vorrichtung gemäß einem der Ausführungsbeispiele 1 bis 6, wobei die Mittel ferner eingerichtet sind zum:
   - Bewirken der Entnahme eines Batteriemoduls aus dem Fahrzeug vor dem Einbringen des zumindest einen und/oder des zumindest einen weiteren Batteriemoduls in das Fahrzeug, wobei die mobile Wechseleinheit zumindest eine Entnahmevorrichtung zur Entnahme eines Batteriemoduls aus dem Fahrzeug aufweist.
Ausführungsbeispiel 8:
   Die Vorrichtung gemäß einem der Ausführungsbeispiele 1 bis 7, wobei die Mittel ferner eingerichtet sind zum:
   - Erhalten zumindest einer Batteriemodulinformation, wobei die Batteriemodulinformation ein Batteriemodul repräsentiert, und wobei das Bestimmen der zumindest einen Einbringvorrichtung zumindest teilweise auf der erhaltenen Batteriemodulinformation basiert.
Ausführungsbeispiel 9:
   Die Vorrichtung gemäß Anspruch 8, die Vorrichtung ferner umfassend Sensormittel eingerichtet zum Erhalten der Batteriemodulinformation von dem durch die Batteriemodulinformation repräsentierten Batteriemodul.
Ausführungsbeispiel 10:
   Die Vorrichtung gemäß Ausführungsbeispiel 8, die Vorrichtung ferner umfassend Kommunikationsmittel eingerichtet zum Empfangen der Batteriemodulinformation von einem Backend-Server.
Ausführungsbeispiel 11:
   Die Vorrichtung gemäß einem der Ausführungsbeispiele 1 bis 10, wobei die Mittel ferner eingerichtet sind zum:
   - Erhalten einer Fahrzeuginformation, wobei die Fahrzeuginformation das Fahrzeug repräsentiert und wobei das Bestimmen der zumindest einen Einbringvorrichtung zumindest teilweise auf der erhaltenen Fahrzeuginformation basiert
Ausführungsbeispiel 12:
   Die Vorrichtung gemäß einem der Ausführungsbeispiele 1 bis 11, die Vorrichtung ferner umfassend Kommunikationsmittel eingerichtet zum Empfangen der Fahrzeuginformation von dem Fahrzeug oder von einem Backend-Server.
Ausführungsbeispiel 13:
   Die Vorrichtung gemäß einem der Ausführungsbeispiele 1 bis 12, wobei die Vorrichtung ferner umfasst:
   - Bewegungsmittel zum Bewegen der mobilen Wechseleinheit umfassend einen Motorantrieb und/oder eine Mehrzahl von Rädern; und/oder
   - die zumindest eine Einbringvorrichtungen; und/oder
   - die zumindest eine Entnahmevorrichtung; und/oder
   - Kommunikationsmittel zur Kommunikation mit dem Backend-Server und/oder dem Fahrzeug.
Ausführungsbeispiel 14:
   Ein Verfahren umfassend:
   - Navigieren einer mobile Wechseleinheit zu einer ersten Position unterhalb eines Fahrzeugs;
   - Bestimmen zumindest einer Einbringvorrichtung der mobilen Wechseleinheit, wobei die zumindest eine Einbringvorrichtung eingerichtet ist zum Einbringen eines auf der Einbringvorrichtung platzierten Batteriemoduls in das Fahrzeug; und
   - Bewirken des Einbringens des auf der bestimmten zumindest einen Einbringvorrichtung platzierten Batteriemoduls in das Fahrzeug.
Ausführungsbeispiel 15:
   Ein Computerprogramm, umfassend Befehle, die bewirken, dass eine Vorrichtung die Verfahrensschritte nach Ausführungsbeispiel 14 ausführt

## Patentansprüche

1. Vorrichtung (150;50;350), umfassend Mittel (51;52;53;55) eingerichtet zum:
- Navigieren (410) einer mobilen Wechseleinheit (100;300) zu einer ersten Position unterhalb eines Fahrzeugs (160);
- Bestimmen (420) zumindest einer Einbringvorrichtung (110;310) der mobilen Wechseleinheit (100;300), wobei die zumindest eine Einbringvorrichtung (110;310) eingerichtet ist zum Einbringen eines auf der Einbringvorrichtung platzierten Batteriemoduls (120;320) in das Fahrzeug (160); und
- Bewirken des Einbringens (430) des auf der bestimmten zumindest einen Einbringvorrichtung (110) platzierten Batteriemoduls (120;320) in das Fahrzeug (160), wobei die Vorrichtung (150;350;50) Teil der mobilen Wechseleinheit (100;300) ist und wobei die Mittel (51;52;53;55) ferner eingerichtet sind zum:
- Erhalten einer Fahrzeuginformation, wobei die Fahrzeuginformation das Fahrzeug (160;360) repräsentiert und wobei das Bestimmen der zumindest einen Einbringvorrichtung (110;310) zumindest teilweise auf der erhaltenen Fahrzeuginformation basiert.

2. Die Vorrichtung (350;50) gemäß Anspruch 1, wobei die mobile Wechseleinheit (300) einschließlich der zumindest einen Einbringvorrichtung (310) eine Vielzahl an Einbringvorrichtungen (310;315) aufweist, wobei die Einbringvorrichtungen jeweils eingerichtet sind zum Einbringen eines auf der jeweiligen Einbringvorrichtung (310;315) platzierten Batteriemoduls (320;325), und wobei die Mittel (51;52;53;55) der Vorrichtung (350;50) ferner eingerichtet sind zum:
- Bestimmen zumindest einer weiteren Einbringvorrichtung (315) aus der Vielzahl an Einbringvorrichtungen (310;315); und
- Bewirken des Einbringens eines weiteren, auf der bestimmten zumindest einen weiteren Einbringvorrichtung (315) platzierten, Batteriemoduls (325) in das Fahrzeug (360).

3. Die Vorrichtung (350;50) gemäß Anspruch 2, wobei die Mittel (51;52;53;55) der Vorrichtung (350;50) ferner eingerichtet sind zum:
- Navigieren der mobilen Wechseleinheit (300), nach dem Einbringen des zumindest einen Batteriemoduls (320) in das Fahrzeug (360) und vor dem Einbringen des zumindest einen weiteren Batteriemoduls (325) in das Fahrzeug (360), von der ersten Position zu einer zweiten Position unterhalb des Fahrzeugs (360).

4. Die Vorrichtung (150;50) gemäß Anspruch 1, wobei die Mittel (51;52;53;55) der Vorrichtung (150; 50) ferner eingerichtet sind zum:
- Bewirken, nach dem Einbringen des zumindest einen Batteriemoduls (120), des Einbringens eines zumindest einen weiteren, auf der bestimmten zumindest einen Einbringvorrichtung (110) platzierten, Batteriemoduls in das Fahrzeug (160).

5. Die Vorrichtung (150;350;50) gemäß einem der Ansprüche 1 bis 4, wobei die zumindest eine Einbringvorrichtung (110) und/oder die Vielzahl an Einbringvorrichtungen (310;315) der mobilen Wechseleinheit (100;300) eingerichtet sind, das zumindest eine Batteriemodul (120;320) und das zumindest eine weitere Batteriemodul (325) derart in das Fahrzeug (160;360) einzubringen, dass das zumindest eine Batteriemodul (320) und das zumindest eine weitere Batteriemodul (325) innerhalb des Fahrzeugs einen einzelnen Batteriestapel (328) bilden.

6. Die Vorrichtung (150;350;50) gemäß Anspruch 5, wobei das zumindest eine Batteriemodul (120;320) und das zumindest eine weitere Batteriemodul (325) innerhalb des Batteriestapels (328) untereinander angeordnet sind und/oder elektrisch miteinander verbunden sind.

7. Die Vorrichtung (150;350;50) gemäß einem der Ansprüche 1 bis 6, wobei die Mittel (51;52;53;55) ferner eingerichtet sind zum:
- Bewirken der Entnahme eines Batteriemoduls aus dem Fahrzeug (160;360) vor dem Einbringen des zumindest einen und/oder des zumindest einen weiteren Batteriemoduls (120;320;325) in das Fahrzeug (160;360), wobei die mobile Wechseleinheit (100;300) zumindest eine Entnahmevorrichtung zur Entnahme eines Batteriemoduls aus dem Fahrzeug (160;360) aufweist

8. Die Vorrichtung (150;350;50) gemäß einem der Anspruch 1 bis 7, wobei die Mittel (51;52;53;55) ferner eingerichtet sind zum:
- Erhalten zumindest einer Batteriemodulinformation, wobei die Batteriemodulinformation ein Batteriemodul repräsentiert, und wobei das Bestimmen (420) der zumindest einen Einbringvorrichtung (110;310) zumindest teilweise auf der erhaltenen Batteriemodulinformation basiert

9. Die Vorrichtung (150;350;50) gemäß Anspruch 8, die Vorrichtung ferner umfassend Sensormittel (210;57) eingerichtet zum Erhalten der Batteriemodulinformation (220) von dem durch die Batteriemodulinformation repräsentierten Batteriemodul (120).

10. Die Vorrichtung (150;350;50) gemäß Anspruch 8, die Vorrichtung (150;350;50) ferner umfassend Kommunikationsmittel (140;340;54) eingerichtet zum Empfangen der Batteriemodulinformation von einem Backend-Server (170;370).

11. Die Vorrichtung (150;350;50) gemäß einem der Ansprüche 1 bis 10, die Vorrichtung (150;350;50) ferner umfassend Kommunikationsmittel (140;340;54) eingerichtet zum Empfangen der Fahrzeuginformation von dem Fahrzeug (160;360) oder von einem Backend-Server (170;370).

12. Die Vorrichtung (150;350;50) gemäß einem der Ansprüche 1 bis 11, wobei die Vorrichtung (150;350;50) ferner umfasst:
- Bewegungsmittel (56) zum Bewegen der mobilen Wechseleinheit (100;300) umfassend einen Motorantrieb und/oder eine Mehrzahl von Rädern (130;330); und/oder
- die zumindest eine Einbringvorrichtungen (110;310;315); und/oder
- die zumindest eine Entnahmevorrichtung; und/oder
- Kommunikationsmittel (140;340;54) zur Kommunikation mit dem Backend-Server (170;370) und/oder dem Fahrzeug (160;360).

13. Verfahren (400), ausgeführt von einer Vorrichtung (150;50;350), welche Teil einer mobilen Wechseleinheit (100;300) ist, wobei das Verfahren umfasst:
- Navigieren (410) der mobilen Wechseleinheit (100;300) zu einer ersten Position unterhalb eines Fahrzeugs (160);
- Bestimmen (420) zumindest einer Einbringvorrichtung (110) der mobilen Wechseleinheit (100;300), wobei die zumindest eine Einbringvorrichtung (110) eingerichtet ist zum Einbringen eines auf der Einbringvorrichtung platzierten Batteriemoduls (120;320) in das Fahrzeug (160); und
- Bewirken des Einbringens (430) des auf der bestimmten zumindest einen Einbringvorrichtung (110) platzierten Batteriemoduls (120;320) in das Fahrzeug (160), wobei das Verfahren weiter umfasst:
- Erhalten einer Fahrzeuginformation, wobei die Fahrzeuginformation das Fahrzeug (160;360) repräsentiert und wobei das Bestimmen der zumindest einen Einbringvorrichtung (110;310) zumindest teilweise auf der erhaltenen Fahrzeuginformation basiert.

14. Computerprogramm, umfassend Befehle, die bewirken, dass eine Vorrichtung (150;350;50) die Verfahrensschritte (410;420;430) nach Anspruch 13 ausführt
